(19) Europäisches Patentamt
European Patent Office
Office européen des brevets

(11) Veröffentlichungsnummer : **0 285 571 B1**

(12) # EUROPÄISCHE PATENTSCHRIFT

(45) Veröffentlichungstag der Patentschrift : **05.02.92 Patentblatt 92/06**

(51) Int. Cl.[5] : **C09B 62/503,** C09B 62/20, D06P 1/38

(21) Anmeldenummer : **88810205.0**

(22) Anmeldetag : **28.03.88**

(54) **Reaktivfarbstoffe, deren Herstellung und Verwendung.**

(30) Priorität : **02.04.87 CH 1258/87**
**27.08.87 CH 3287/87**

(43) Veröffentlichungstag der Anmeldung :
**05.10.88 Patentblatt 88/40**

(45) Bekanntmachung des Hinweises auf die Patenterteilung :
**05.02.92 Patentblatt 92/06**

(84) Benannte Vertragsstaaten :
**BE CH DE FR GB IT LI**

(56) Entgegenhaltungen :
**EP-A- 0 141 776**
**FR-A- 1 546 109**
**GB-A- 1 118 785**

(73) Patentinhaber : **CIBA-GEIGY AG**
**Klybeckstrasse 141**
**CH-4002 Basel (CH)**

(72) Erfinder : **Seitz, Karl, Dr.**
**Schützenweg 9**
**CH-4104 Oberwil (CH)**
Erfinder : **Hoegerle, Karl, Dr.**
**Conrad Ferdinand Meyer-Strasse 54**
**CH-4059 Basel (CH)**

EP 0 285 571 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollten ferner eine hohe Reaktivität besitzen, so dass nur kurze Verweilzeiten erforderlich sind, und sie sollen insbesondere Färbungen mit hohen Fixiergraden liefern. Es sind bereits aus der EP-A 0141776 faserreaktive Farbstoffe enthaltend einen Reaktivrest der Formel

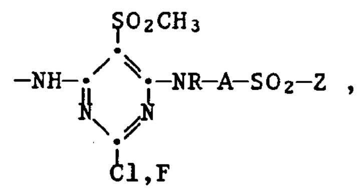

worin R Wasserstoff oder Methyl, A $C_2$-$C_3$-Alkylen oder Phenylen, Z Vinyl oder ein Rest —$CH_2$-$CH_2$-Y und Y ein unter alkalischen Bedingungen abspaltbarer anorganischer oder organischer Rest sind, bekannt. Diese vermögen jedoch nicht alle Wünsche bezüglich der Applikation und Echtheiten zu erfüllen.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe gelöst wird.

Gegenstand der Erfindung sind Reaktivfarbstoffe der Formel

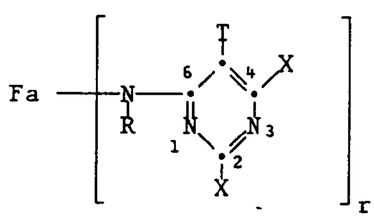

(1),

worin Fa der Rest eines organischen Farbstoffes der Monoazo- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe ist,
T Nitro, Cyano, $C_1$-$C_4$-Alkylsulfonyl, Carboxy, Chlor, $C_1$-$C_4$-Alkoxysulfonyl, $C_1$-$C_4$-Alkoxysulfinyl, $C_1$-$C_4$-Alkoxycarbonyl oder $C_1$-$C_4$-Alkanoyl bedeutet, ein X Halogen und das andere X eine Gruppe der Formel

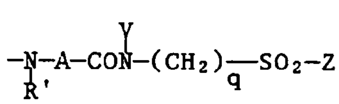

(2)

oder der Formel

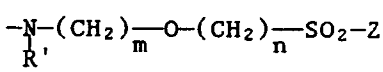

(3)

ist,

| | |
|---|---|
| A | Arylen bedeutet, |
| V | Wasserstoff, ein unsubstituierter oder durch Halogen, Hydroxy, Cyano, Carboxy, Sulfo, Sulfato, $C_1$-$C_4$-Alkoxycarbonyl oder $C_1$-$C_4$-Alkoxy substituierter $C_1$-$C_4$-Alkylrest oder ein Rest der Formel $—(CH_2)_q-SO_2-Z$ ist, |
| Z | einen Rest $—CH=CH_2$ oder $—CH_2-CH_2-Y$ darstellt und Y ein unter alkalischen Bedingungen abspaltbarer anorganischer oder organischer Rest ist, |
| q, m und n | unabhängig voneinander eine ganze Zahl von 2 bis 6 bedeuten, |
| R und R′ | unabhängig voneinander für Wasserstoff oder unsubstituiertes oder durch Halogen, Hydroxy, Cyano, Carboxy, Sulfo, Sulfato, $C_1$-$C_4$-Alkoxycarbonyl oder $C_1$-$C_4$-Alkoxy substituiertes $C_1$-$C_4$-Alkyl stehen und |
| r = | 1 oder 2 ist. |

Der Rest Fa in Formel (1) kann an seinem Grundgerüst die bei organischen Farbstoffen üblichen Substituenten gebunden enthalten.

Beispiele für geeignete Substituenten im Rest Fa sind : $C_1$-$C_4$-Alkyl, womit generell Methyl, Ethyl, n- oder iso-Propyl oder n-, sec.- oder tert.-Butyl umfasst ist ; $C_1$-$C_4$-Alkoxy, worunter generell Methoxy, Ethoxy, n- oder iso-Propoxy oder n-, sec.- oder tert.-Butoxy zu verstehen ist ; $C_1$-$C_4$-Alkanoylamino, besonders Acetylamino oder Propionylamino ; Benzoylamino ; Kino ; N-Mono- oder N,N-Di-$C_1$-$C_4$-Alkylamino, wobei das Alkyl z.B. durch $—OH$, $—OCOCH_3$, $—OSO_3H$, $—CN$ oder Halogen weitersubstituiert sein kann, z.B. Methylamino, Ethylamino, n- oder iso-Propylamino, n-, sec.- oder tert.-Butylamino, N,N-Di-β-hydroxyethylamino, N,N-Di-β-sulfatoethylamino, Hydroxypropylamino, β-Sulfatoethylamino, β-Chlorethylamino, β-Acetyloxyethylamino ; Phenylamino ; Mono- oder Di-Sulfobenzylamino ; $C_1$-$C_4$-Alkoxycarbonyl, z.B. Methoxy- oder Ethoxycarbonyl ; $C_1$-$C_4$-Alkyl-sulfonyl, z.B. Methyl- oder Ethylsulfonyl ; Trifluormethyl ; Nitro ; Cyano ; Halogen, worunter generell Fluor, Chlor und Brom zu verstehen ist ; Carbamoyl ; N-Mono- oder N,N-Di-$C_1$-$C_4$-Alkylcarbamoyl ; Sulfamoyl ; N- Mono- oder N,N-Di-$C_1$-$C_4$-Alkylsulfamoyl ; N-(β-hydroxyethyl)-sulfamoyl ; N,N-Di-(β-hydroxyethyl)-sulfamoyl ; N-Phenylsulfamoyl ; Hydroxy ; Carboxy ; Sulfo ; Sulfomethyl ; Ureido.

Fa bedeutet vorzugsweise den Rest eines organischen Farbstoffes der Mono- oder Polyazo-, Metallkomplexazo-, Anthrachinon-, Phthalocyanin-, Formazan- oder Dioxazinreihe, welcher durch einen oder mehrere der oben genannten Rest substituiert ist.

Besonders bevorzugt enthält der Rest Fa eine oder mehrere Sulfogruppen und kann darüberhinaus durch einen oder mehrere der obengenannten Reste weitersubstituiert sein.

Handelt es sich bei Fa um den Rest eines Mono- oder Disazofarbstoffes, so ist dieser besonders bevorzugt durch einen oder mehrere Reste, ausgewählt aus der Gruppe Methyl, Ethyl, Methoxv, Ethoxy, Acetylamino, Benzoylamino, Amino, Chlor, Brom, Ureido, Hydroxy, Carboxy, Sulfomethyl und Sulfo, substituiert.

Beispiel für substituierte $C_1$-$C_4$-Alkylreste R und R′ sind : Carboxymethyl, β-Carboxyethyl, Methoxycarbonylmethyl, Ethoxycarbonylmethyl, β-Methoxyethyl, β-Ethoxyethyl, β-Chlorethyl, γ-Brompropyl, β-Hydroxyethyl, β-Hydroxybutyl, β-Cyanethyl, Sulfomethyl, β-Sulfoethyl, β-Sulfatoethyl.

R und R′ stehen unabhängig voneinander bevorzugt für Methyl oder Ethyl und insbesondere für Wasserstoff.

Beispiele für geeignete Substituenten T sind : Nitro, Cyano, $C_1$-$C_4$-Alkyl-sulfonyl, besonders Methyl- oder Ethylsulfonyl, Carboxy, Chlor, $C_1$-$C_4$-Alkoxysulfonyl, $C_1$-$C_4$-Alkylsulfinyl, $C_1$-$C_4$-Alkoxycarbonyl, $C_1$-$C_4$-Alkanoyl, besonders Formyl.

Vorzugsweise handelt es sich bei T um Cyano, Methyl- oder Ethylsulfonyl, Chlor, Formyl oder Nitro und insbesondere bevorzugt um Cyano, Methylsulfonyl oder Formyl.

Bei X als Halogen handelt es sich z.B. um Fluor, Chlor oder Brom und vorzugsweise um Fluor oder Chlor.

Steht X für eine Gruppe der zuvor angegebenen Formel (2), so ist A als Arylen z.B. der bivalente Rest eines Benzols, Naphthalins, Biphenyls, Stilbens, Diphenylmethans oder Diphenylethers.

Das Arylen kann unsubstituiert oder z.B. durch $C_1$-$C_4$-Alkyl, besonders Methyl oder Ethyl, $C_1$-$C_4$-Alkoxy, besonders Methoxy oder Ethoxy, Halogen wie Fluor, Chlor oder Brom, Nitro, Cyano, Ureido, Acetylamino, Hydroxy, Carboxy und/oder Sulfo substituiert sein.

Vorzugsweise handelt es sich bei A um einen unsubstituierten oder z.B. durch Sulfo, Ureido, Methyl, Ethyl, Methoxy, Ethoxy, Chlor, Hydroxy oder Carboxy substituierten 1,3- oder 1,4-Phenylenrest.

q, m und n stehen unabhängig voneinander bevorzugt für eine ganze Zahl von 2 bis 4 und besonders bevorzugt für die Zahl 2.

Als ein unter alkalischen Bedingungen abspaltbarer anorganischer oder organischer Rest Y kommt z.B. eine der folgenden abspaltbaren Gruppen in Betracht :

$—OSO_3H$, $—SSO_3H$, $—OCOCH_3$, $—OPO_3H_2$, $—O\text{-}CO\text{-}C_6H_5$,

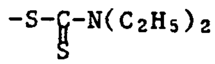 ,

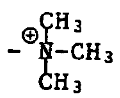 ] $X^{\ominus}$ (X = Halogen),

-Cl, -Br, -F,

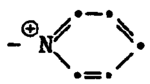 ] $Cl^{\ominus}$ , $-\overset{\oplus}{N}(CH_3)_3$ ] $CH_3SO_4^{\ominus}$

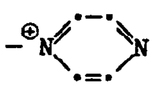 ] $X^{\ominus}$ (X = Halogen),

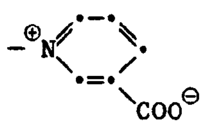 , 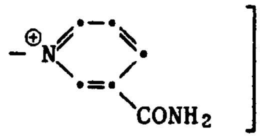 $X^{\ominus}$

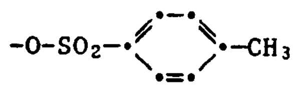 ,

$-O-SO_2-N(CH_3)_2$, 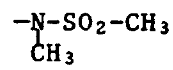 ,

$-O-SO_2-CH_3$, $-S-C\equiv N$,

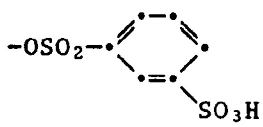 , 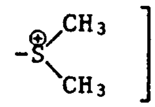 $CH_3SO_4^{\ominus}$ ,

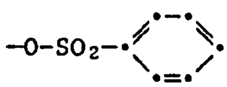 ,

$-OOCCCl_3$ , $-OOCCHCl_2$ , $-OOCCH_2Cl$ ,

$-O-O_2SR$ (R = Alkyl oder Aryl), $-O-SO_2-N(C_2H_5)_2$ ,

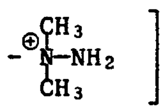 $Cl^{\ominus}$ , 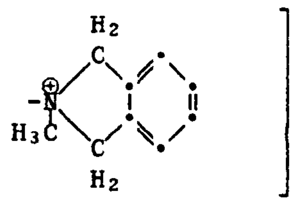 $Cl^{\ominus}$

Vorzugsweise ist Y eine Gruppe $-OSO_3H$, $-SSO_3H$, $-OCOCH_3$, $-OPO_3H_2$, $-Cl$ oder $-O-CO-C_6H_5$ und insbesondere bevorzugt ist für Y die Bedeutung $-OSO_3H$.

In einer bevorzugten Ausführungsform der erfindungsgemässen Reaktivfarbstoffe der Formel (1) stellt Z einen Rest $-CH=CH_2$ dar.

Ist V ein substituierter $C_1$-$C_4$-Alkylrest, so kann dieser z.B. die zuvor für R bzw. R' angegebenen Bedeutungen haben.

Steht V für einen Rest der Formel $-(CH_2)_q-SO_2-Z$, so kann sich dieser von dem in der Gruppe der Formel (2) vorhandenen zweiten Rest $-(CH_2)_q-SO_2-Z$ unterscheiden oder, vorzugsweise, mit letzerem übereinstimmen.

V bedeutet vorzugsweise Wasserstoff, Methyl, Ethyl oder die Gruppe $-(CH_2)_q-SO_2-Z$ : insbesondere bevorzugt ist für V die Bedeutung Wasserstoff.

Vorzugsweise ist das Halogenatom X in 2-Stellung und die Gruppe der Formel (2) oder (3) in 4-Stellung in Pyrimidinrest angeordnet.

Bevorzugt sind insbesondere Reaktivfarbstoffe der Formel (1), worin ein X Halogen ist und das andere X eine Gruppe der Formel

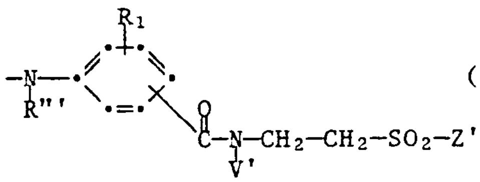

(2a)

oder

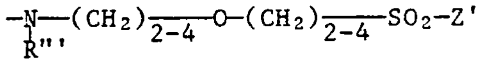

(3a),

worin R‴ und V′ unabhängig voneinander Wasserstoff oder $C_1$-$C_4$-Alkyl bedeuten, $R_1$ Wasserstoff, Sulfo, Ureido, Chlor, Methyl, Ethyl, Methoxy, Ethoxy, Hydroxy oder Carboxy ist, Z′ eine Gruppe $-CH=CH_2$ oder $-CH_2-CH_2-Y'$ darstellt und Y′ für $-OSO_3H$, $-SSO_3H$, $-OCOCH_3$, $-OPO_3H_2$, $-Cl$ oder $-OCO-C_6H_5$ steht, ist.

In Betracht zu ziehen sind ferner auch Reaktivfarbstoffe der Formel

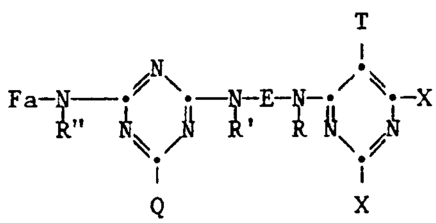

(1a)

worin Fa, T, R, R′ und X jeweils die unter der Formel (1) angegebene Bedeutung haben, R″ unabhängig die Bedeutung von R hat, E ein gegebenenfalls substituiertes aliphatisches oder aromatisches Brückenglied ist und Q für ein Halogenatom, eine gegebenenfalls substituierte Aminogruppe, Hydroxy, eine $C_1$-$C_4$-Alkoxy-, Phenyloxy-, $C_1$-$C_4$-Alkylthio- oder Phenylthiogruppe steht. Das Brückenglied E ist vorzugsweise ein Alkylen-oder Arylenrest. So kann E ein langer (z.B. mit 10 oder mehr Kohlenstoffatomen) oder kürzerer, geradkettiger oder verzweigter Alkylenrest sein ; insbesondere kommt ein Alkylenrest mit 2 bis 6 Kohlenstoffatomen in Betracht, z.B. Ethylen, Propylen, Butylen, Hexylen oder Cyclohexylen. Als Arylenrest ist E z.B. ein Naphthylenrest, der Rest eines Diphenyls oder Stilbens oder insbesondere ein Phenylenrest. Der Rest E kann weitere Substituenten enthalten, z.B. Halogenatome, wie Fluor, Chlor und Brom, Alkylgruppen mit 1 bis 4 Kohlenstoffatomen, wie Methyl, Ethyl und Propyl, Alkoxygruppen mit 1 bis 4 Kohlenstoffatomen, wie Methoxy, Ethoxy, Propyloxy and Isopropyloxy, Carboxy oder Sulfo.

Der in eckige Klammern eingeschlossene Teil von Formel (1) ist ein Reaktivrest, welcher ein- oder zweimal im Molekül vorhanden sein kann ; falls r = 2 ist, können die beiden Reaktivreste gleich oder verschieden sein; vorzugsweise sind beide Reste gleich.

Besonders bevorzugt sind Reaktivfarbstoffe der Formel (1), worin r = 1 ist.

Die Verbindungen der Formel (1) sind faserreaktiv. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Eine bevorzugte Gruppe von erfindungsgemässen Reaktivfarbstoffen umfasst Verbindungen der zuvor angegebenen Formel (1), worin Fa der Rest eines organischen Farbstoffes der Mono- oder Polyazo-, Metallkomplexazo-, Anthrachinon-, Phthalocyanin-, Formazan- oder Dioxazinreihe, welcher eine oder mehrere Sulfogruppen trägt und darüberhinaus durch einen oder mehrere der zuvor genannten Reste weitersubstituiert sein kann, ist, R Wasserstoff oder einen unsubstituierten oder z.B. durch Halogen, Hydroxy, Cyano, Carboxy, Sulfo, Sulfato, $C_1$-$C_4$-Alkoxycarbonyl oder $C_1$-$C_4$-Alkoxy substituierten $C_1$-$C_4$-Alkylrest darstellt,
T für Cyano, Nitro, Chlor, Formyl, Methylsulfonyl oder Ethylsulfonyl steht,
ein X Chor oder Fluor und das andere X eine Gruppe der Formel

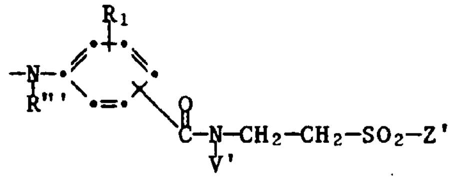
(2a) ist,

wobei R‴ und V′ unabhängig voneinander Wasserstoff oder $C_1$-$C_4$-Alkyl bedeuten, Z′ eine Gruppe —$CH=CH_2$ oder —$CH_2$-$CH_2$-Y′ ist, Y′ für —$OSO_3H$, —$SSO_3H$, —$OCOCH_3$, —$OPO_3H_2$, —Cl oder —OCO-$C_6H_5$ steht und $R_1$ Wasserstoff, Sulfo, Ureido, Chlor, Methyl, Ethyl, Methoxy, Ethoxy, Hydroxy oder Carboxy bedeutet, und r = 1 ist.

Eine besonders bevorzugte Ausführungsform der vorliegenden Erfindung betrifft Reaktivfarbstoffe der Formel

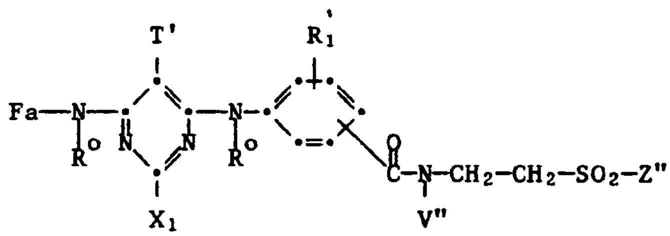
(1b)

worin für Fa die zuvor angegebenen Bedeutungen und Bevorzugungen gelten, T′ für Methylsulfonyl, Formyl oder Cyano steht, $X_1$ Fluor oder Chlor bedeutet, R° und V″ unabhängig voneinander Wasserstoff, Methyl oder Ethyl bedeuten, Z″ eine Gruppe —$CH=CH_2$, —$CH_2$-$CH_2$-$OSO_3H$, —$CH_2$-$CH_2$-Cl oder —$CH_2$-$CH_2$-$OCOCH_3$ darstellt und $R'_1$ für Wasserstoff, Sulfo, Ureido oder Carboxy steht.

Eine weitere Gruppe von brauchbaren erfindungsgemässen Reaktivfarbstoffen umfasst Verbindungen der Formel (1), worin für Fa, R, T und n die zuvor genannten Bedeutungen und Bevorzugungen gelten und ein X Chlor oder Fluor bedeutet und das andere X eine Gruppe der Formel

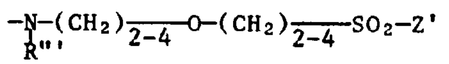
(3a)

ist, worin R‴ und Z′ jeweils die unter der Formel (2a) angegebene Bedeutung haben.

Insbesondere bevorzugt sind hierbei Verbindungen der Formel

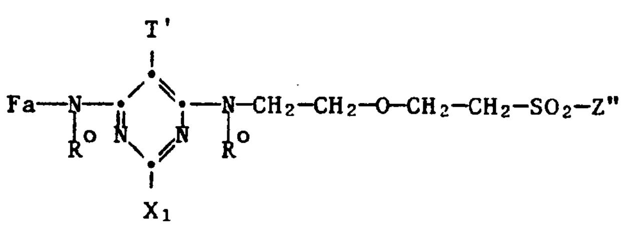
(1c),

worin Fa, R°, T′, $X_1$ und Z″ jeweils die unter der Formel (1b) angegebene Bedeutung haben.

Bevorzugte Untergruppen der Reaktivfarbstoffe der Formel (1) sind :

a) Mono- oder Disazofarbstoffe der Formel

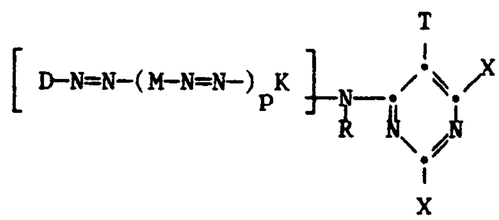

(4)

oder der Formel

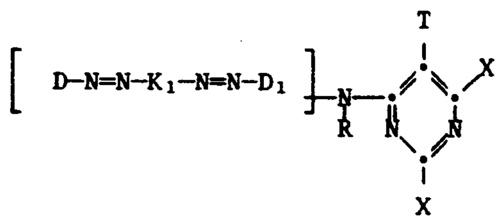

(5),

worin für R, T und X jeweils die zuvor angegebenen Bedeutungen und Bevorzugungen gelten, D und $D_1$ unabhängig voneinander eine Diazokomponente der Benzol- oder Naphthalinreihe darstellen, M eine Mittelkomponente der Benzol- oder Naphthalinreihe ist, K für eine Kupplungskomponente der Benzol- oder Naphthalinreihe oder der heterocyclischen Reihe steht, $K_1$ der Rest einer Kupplungskomponente der Aminonaphtholsulfonsäure-Reihe ist und p 0 oder 1 bedeutet.

Als Untergruppen der Reaktivfarbstoffe der Formel (4) sind zu nennen :
Verbindungen der Formel

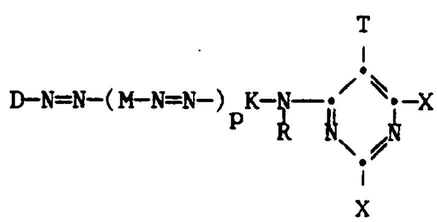

(4a)

und Verbindungen der Formel

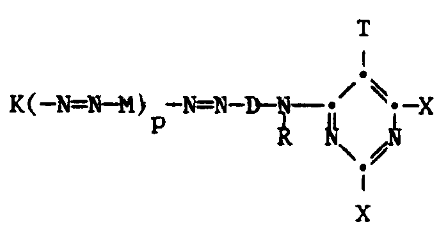

(4b),

worin R, T, X, K, D, M und p jeweils die zuvor angegebene Bedeutung haben.

In Betracht zu ziehen sind auch Reaktivfarbstoffe der Formeln (4), (4a), (4b) und (5), worin der Rest D, $D_1$ und/oder K noch einen weiteren Reaktivrest einschliesst, so dass auch tri- und tetra-reaktive Farbstoffe umfasst sind. Die zusätzlichen, in D, $D_1$ oder K eingeschlossenen Reaktivreste können über eine Aminogruppe, oder in anderer Weise, z.B. durch eine direkte Bindung, an D, $D_1$ bzw. K gebunden sein.

Ein gegebenenfalls in D, $D_1$ oder K eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl- oder Halogenpropionylrest.

Insbesondere ist der zusätzliche Reaktivrest ein direkt oder über ein Brückenglied gebundener Vinylsulfonyl-, β-Sulfatoethylsulfonyl-, β-Thiosulfatoethylsulfonyl, β-Chlorethylsulfonyl oder β-Acetoxyethylsulfonyl-Rest.

Die obigen Erläuterungen gelten sinngemäss auch für Metallkomplexazofarbstoffe, sowie für andere in der Definition des Farbstoffrestes D in Formel (1) genannte Chromophore.

Die Reste D und $D_1$ können sich z.B. von den folgenden Diazokomponenten ableiten :
Aminobenzol, 1-Amino-2-, -3- oder -4-methylbenzol, 1-Amino-2-, -3-oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenylether, 1-Aminobenzol-2-, -3- oder -4-sulfonsäureamide, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-4-methoxybenzol-2-sulfonsäure, 1-Amino-4-ethoxybenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin,-2,5,7-trisulfonsäure, 2-Aminonaphthalin-1,5,7-, -3,6,8-oder -4,6,8-trisulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure, 1-Amino-4-β-sulfatoethylsulfonylbenzol, 1-Amino-4-vinylsulfonylbenzol, 1-Amino-3-vinylsulfonylbenzol, 1-Amino-4-β-sulfatoethylsulfonylbenzol-2-sulfonsäure, 1-Amino-4-[β-(β′-chlorethylsulfonyl) ethylaminocarbonyl]benzol-2-sulfonsäure, 1-Amino-4-β-(vinylsulfonyl) ethylaminocarbonylbenzol-2-sulfonsäure, 1-Amino-3-γ-(vinylsulfonyl) butyrylaminobenzol-6-sulfonsäure, 1-Amino-3-vinylsulfonyl-6-methoxybenzol, 1-Amino-3-β-(vinylsulfonyl) ethylaminocarbonyl-6-methoxybenzol und 1-Amino-3-β-(vinylsulfonyl) ethylaminocarbonylbenzol ; ferner Diaminobenzole oder Diaminonaphthaline, wie 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diaminobenzol-2-carbonsäure, 1,3-Diaminobenzol-4-carbonsäure, 1-Amino-3-aminomethylbenzol-6-sulfonsäure, 1-Amino-3-aminomethyl-4-methoxybenzol-2-sulfonsäure, 2,6-Diaminonaphthalin-4,8-disulfonsäure, 2-Amino-5-aminomethylnaphthalin-1-sulfonsäure und 2-Amino-5-aminomethylnaphthalin-1,7-disulfonsäure ; statt eines Diamins kann auch einen Aminoacetylaminoverbindung eingesetzt werden, aus welcher nachträglich die Acetylgruppe durch Verseifen wieder abgespalten wird, z.B. 1-Acetylamino-3-aminobenzol-4-sulfonsäure oder 1-Acetylamino-4-aminobenzyl-3-sulfonsäure.

Der Rest M kann sich z.B. von folgenden Mittelkomponenten ableiten :
Anilin ; m-Toluidin ;
2,5-Dimethyl- oder -Dimethoxy-anilin ;
m-Amino-anisol ; m-Acetylamino-, m-Propionylamino-, m-Butyrylamino- oder m-Benzoylamino-anilin ;
m-Amino-phenylharnstoff ;
4-Acetamino-2-amino-toluol oder -anisol ;
2-Amino-4-methylanisol ;
1-Aminonaphthalin-6- oder -7-sulfonsäure ;
2-Amino-4-acetylamino-benzolsulfonsäure ;
2-Amino-5-naphthol-7-sulfonsäure ;
2-Amino-8-naphthol-6-sulfonsäure ;
2-(4-Aminobenzoyl-amino)-5-naphthol-7-sulfonsäure ;
Acetoacet-3-sulfo-4-amino-anilid.

Aus der grossen Zahl der möglichen Kupplungskomponenten K und $K_1$ seien die folgenden beispielhaft genannt :
Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6-oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure,

1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6-oder -4,6-disulfonsäure, 2-Benzoylamino-5-hydroxynaphthalin-7-sulfonsäure, 2-Amino-5-hydroxynaphthalin-7-sulfonsäure, 2-Methyl-bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4′-Aminobenzoylamino)-8-hydroxynaphthalin-3,6- bzw. -4,6-disulfonsäure, 1-(4′-Nitrobenzoylamino)-8-hydroxynaphthalin-3,6- bzw. -4,6-disulfonsäure, 1-(3′-Aminobenzoylamino)-8-hydroxynaphthalin-3,6- bzw. -4,6-disulfonsäure 1-(3′-Nitrobenzoylamino)-8-hydroxynaphthalin-3,6- bzw. -4,6-disulfonsäure, 2-(4′-Amino-3′-sulfophenylamino)-5-hydroxynaphthalin-7-sulfonsäure, 3-Methylpyrazolon-(5), 1-Phenyl-3-methyl-5-pyrazolon, 1-(4′-Sulfophenyl)-3-methyl-5-pyrazolon, 1-(4′-Sulfophenyl)-pyrazolon-(5)-3-carbonsäure, 1-(3′-Aminophenyl)-3-methyl-5-pyrazolon, 1-(2′,5′-Disulfophenyl)-3-methyl-5-pyrazolon, 1-(2′-Methyl-4′-sulfophenyl)-5-pyrazolon-3-carbonsäure, 1-(4′,8′-Disulfonaphthyl-[2′])-3-methyl-5-pyrazolon, 1-(5′,7′-Disulfonaphthyl-[2′])-3-methyl-5-pyrazolon, 1-(2′,5′-Dichlor-4′-sulfophenyl)-3-methyl-5-pyrazolon, 3-Aminocarbonyl-4-methyl-6-hydroxypyridon-(2), 1-Ethyl-3-cyan- oder -3-chlor-4-methyl-6-hydroxypyridon-(2), 1-Ethyl-3-sulfomethyl-4-methyl-6-hydroxypyridon-(2), 2,4,6-Triamino-3-cyanpyridin, 2-(3′-Sulfophenylamino)-4,6-diamino-3-cyanpyridin, 2-(2′-Hydroxyethylamino)-3-cyan-4-methyl-6-aminopyridin, 2,6-Bis-(2′-hydroxyethylamino)-3-cyan-4-methylpyridin, 1-Ethyl-3-carbamoyl-4-methyl-6-hydroxypyridon-(2), 1-Ethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2-(2′,5′-disulfophenylazo)-naphthalin-3,6-di-sulfonsäure, 1-β-Aminoethyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyethylaminobenzol, 1-Amino-3-N,N-di-β-sulfatoethylaminobenzol, 1-Amino-3-N,N-di-β-hydroxyethylamino-4-methoxybenzol, 1-Amino-3-N,N-di-β-sulfato-ethylamino-4-methoxybenzol, 1-Amino-3-sulfo-benzylaminobenzol, 1-Amino-3-sulfo-benzylamino-4-chlorbenzol, 1-Amino-3-N,N-disulfobenzylaminobenzol, N,N-Di-(β-sulfatoethyl)-anilin, 3-Acetylamino- N,N-di-(β-sulfatoethyl)-anilin, 3-Methyl-N,N-di-(β-sulfatoethyl)anilin, N-Ethyl-N-(β-hydroxyethyl)-anilin, N-Ethyl-N-(β-acetoxyethyl)-anilin, 3-Acetylamino-N,N-di(β-hydroxyethyl)-anilin, 3-Methyl-N,N-di-(β-acetoxyethyl)-anilin, 2-Methoxy-5-acetylamino-N-(β-acetoxyethyl)-N-benzylanilin, 2-Chlor-5-acetylamino-N-(γ-phenoxy-β-hydroxy-n-propyl)-anilin, 3-Ureidoanilin, N-Ethyl-N-(3′-sulfobenzyl)-anilin, 3-Methyl-N-ethyl-N-(β-sulfatoethyl)-anilin,3-Methyl-N,N-di-(β-hydroxyethyl)-anilin, 3-Methyl-6-methoxy-N,N-di-(β-hydroxyethyl)-anilin.

Entsprechen die erfindungsgemässen Reaktivfarbstoffe der Formel (4) bzw. (5) und handelt es sich demgemäss bei Fa in Formel (1) um den Rest einer Mono- oder Disazoverbindung, so kann sich dieser z.B. von den folgenden organischen Mono- oder Disazofarbstoffen ableiten :

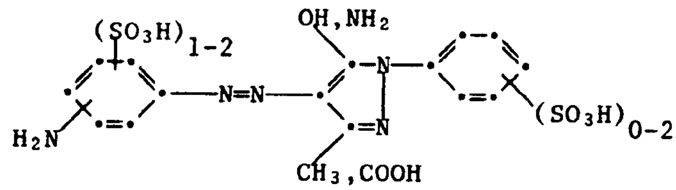

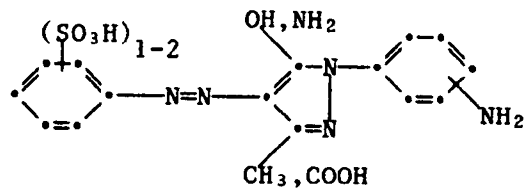

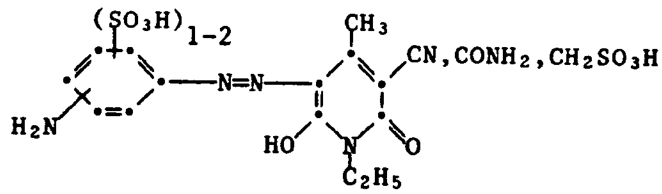

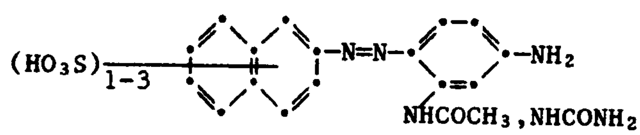

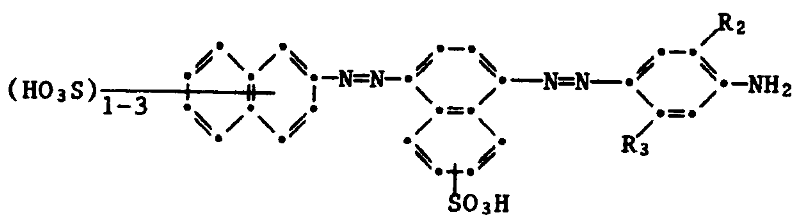

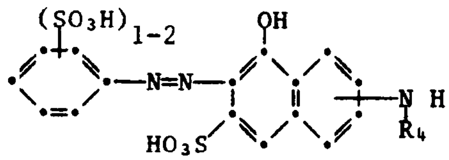

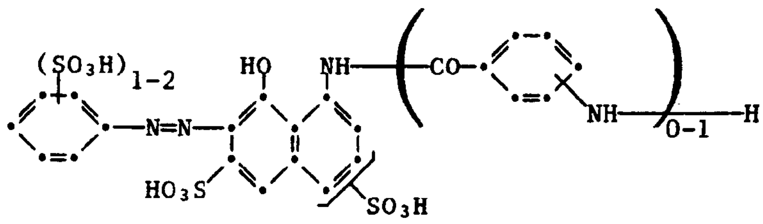

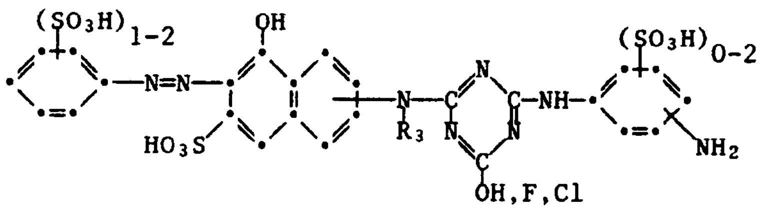

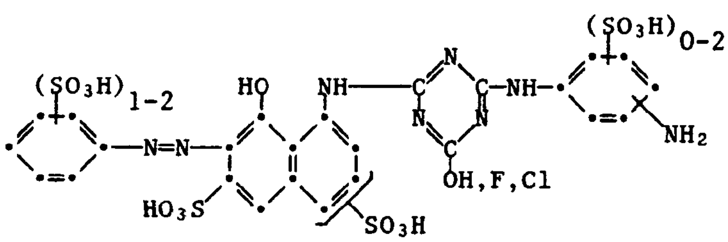

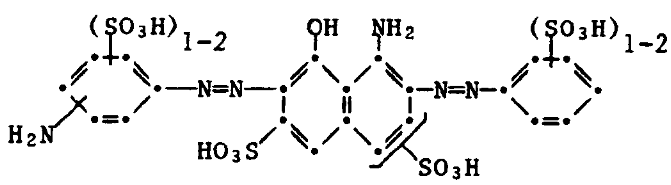

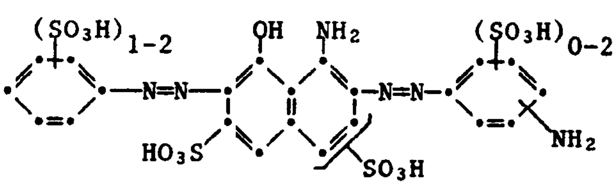

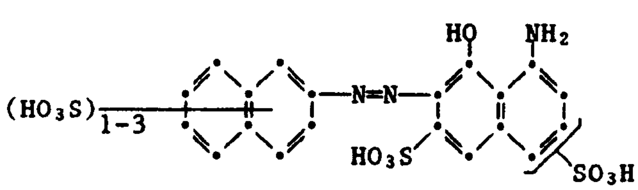

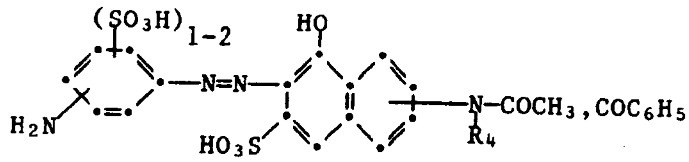

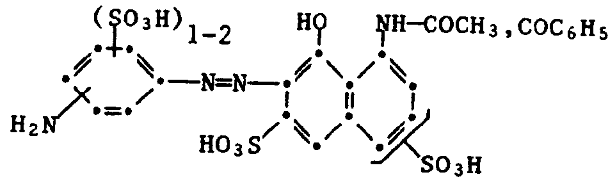

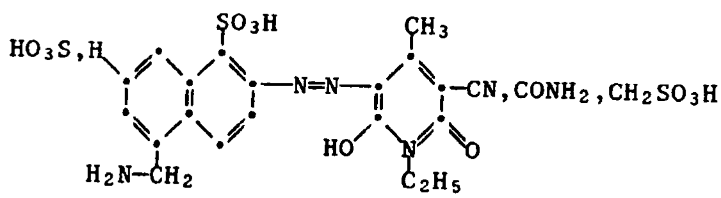

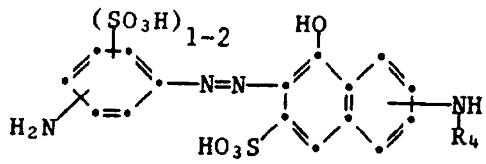

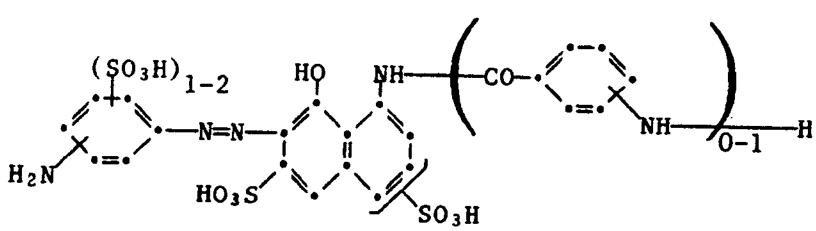

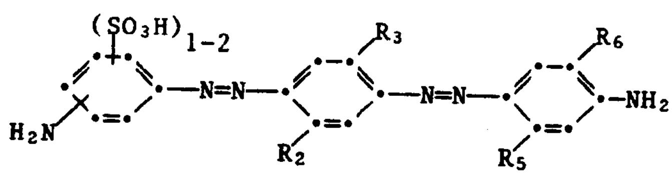

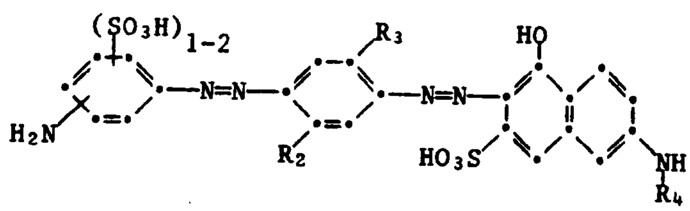

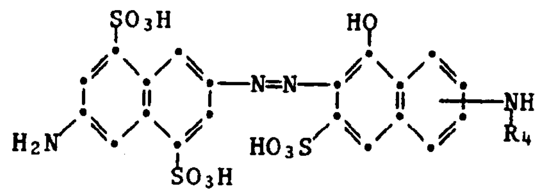

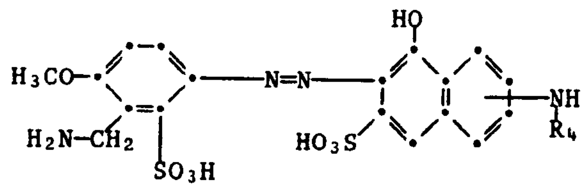

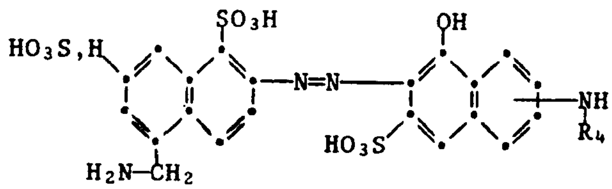

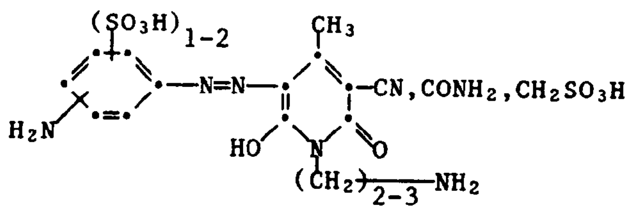

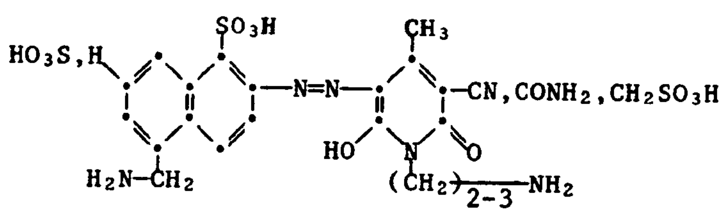

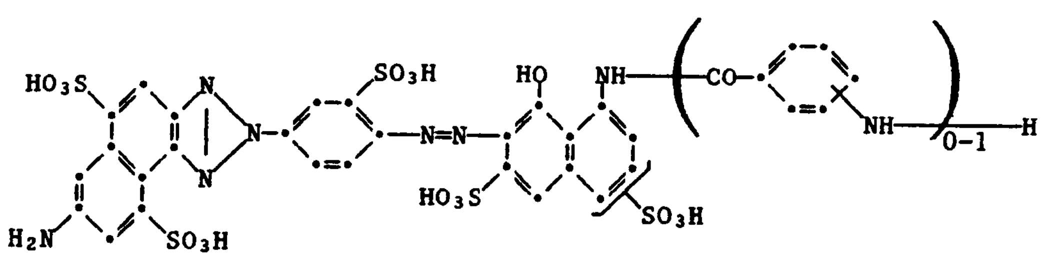

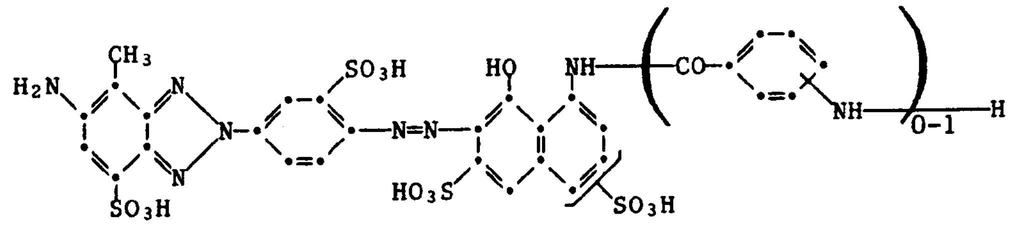

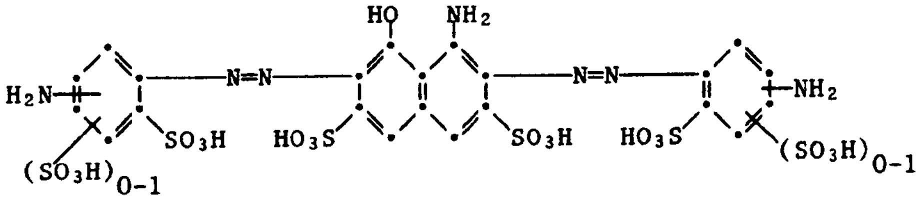

In den oben aufgeführten Formeln bedeuten $R_2$, $R_3$, $R_5$ und $R_6$ unabhängig voneinander z.B. Wasserstoff, $C_1$-$C_4$-Alkyl, $C_1$-$C_4$-Alkoxy, $C_1$-$C_4$-Alkanoylamino, Ureido oder Halogen und $R_4$ steht z.B. für Wasserstoff oder $C_1$-$C_4$-Alkyl.

b) Metallkomplexe von Mono- oder Disazofarbstoffen der zuvor angegebenen Formeln (4) oder (5), welche zur Metallkomplexbildung befähigte Gruppen, z.B. Hydroxy, Carboxy, Amino oder Sulfo, aufweisen :

Handelt es sich bei Fa in Formel (1) um den Rest eines Metallkomplexazofarbstoffes, so kann sich Fa z.B. von einem Metallkomplex der im folgenden genannten Farbstoffe ableiten :

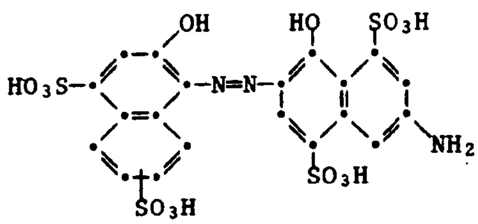

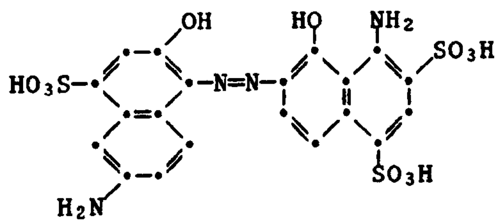

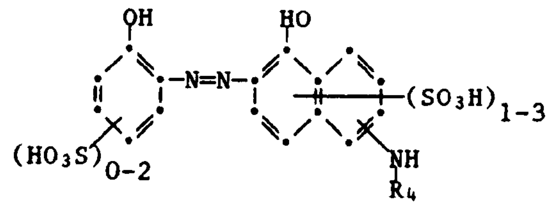

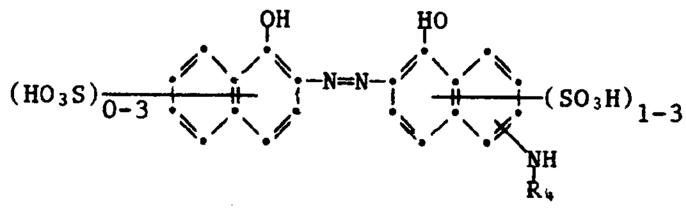

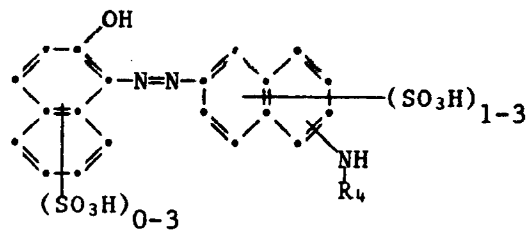

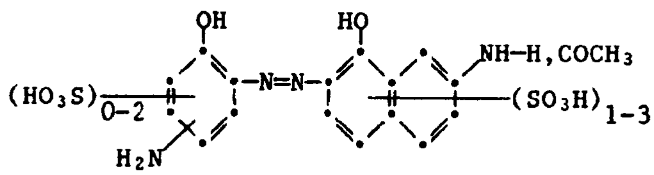

wobei $R_4$ jeweils die zuvor angegebene Bedeutung hat.

Als Metallatome sind Cu (1 : 1-Komplex) oder Cr und Co (1 : 2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Beispiele für geeignete Kupferkomplexfarbstoffe, die dem Rest Fa in Formel (1) zugrunde liegen können, sind :

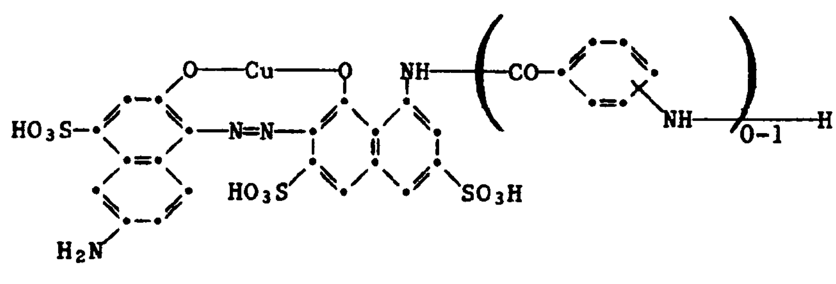

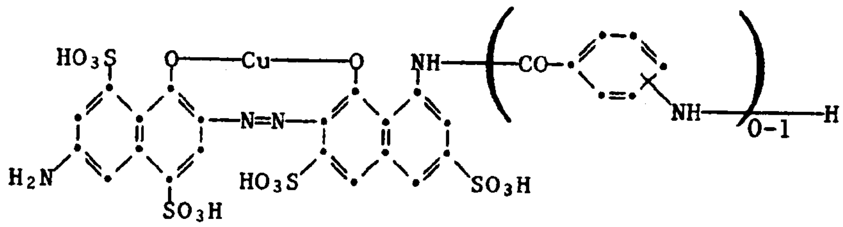

c) Anthrachinonfarbstoffe der Formel

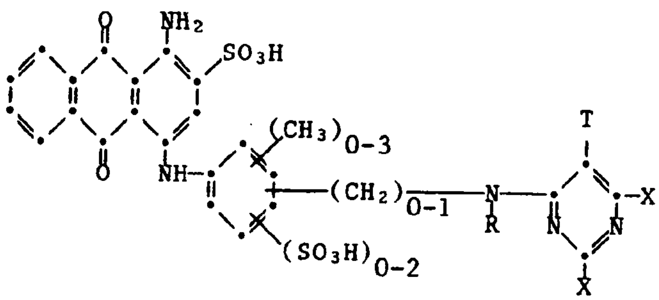

(6),

worin R, T und X jeweils die zuvor angegebene Bedeutung haben.

d) Formazanfarbstoffe der Formel

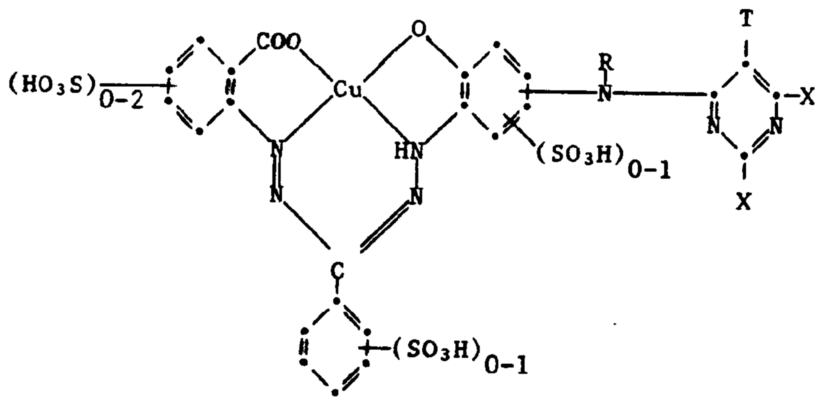

(7),

worin R, T und X jeweils die zuvor angegebene Bedeutung haben.

e) Phthalocyaninfarbstoffe der Formel

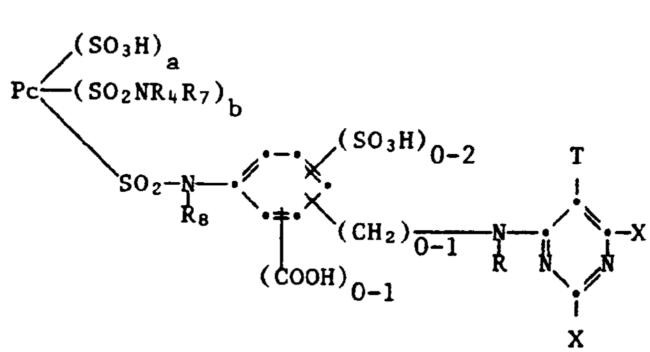

(8),

worin R, T und X jeweils die zuvor angegebene Bedeutung haben, Pc der Rest eines Cu- oder Ni-Phthalocyanins ist, $R_4$, $R_7$ und $R_8$ unabhängig voneinander $C_1$-$C_4$-Alkyl und insbesondere Wasserstoff bedeuten und a und b ganze oder gebrochene Zahlen von 1 bis 3 sind, wobei a und b zusammen 3,0 ergeben.

f) Reaktivfarbstoffe der Formel (1) worin Fa z.B. ein Rest eines Dioxazinfarbstoffs der Formel

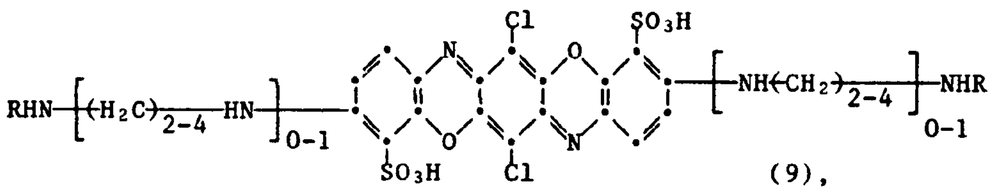

(9),

worin R die zuvor angegebene Bedeutung hat, ist.

Eine besonders bevorzugte Ausführungsform der vorliegenden Erfindung betrifft Reaktivfarbstoffe der zuvor angegebenen Formel (1b), worin Fa ein Rest der Formel.

$$[D - N = N - (M - N = N-)_p K ]- \quad (4') \text{ oder}$$

$$[D - N = N - K_1 - N = N-D_1 ]- \quad (5') \text{ ist und}$$

D, $D_1$, M, K, $K_1$ und p jeweils die unter der Formel (4) bzw. (5) angegebene Bedeutung haben.

Insbesondere bevorzugt sind hierbei einerseits Farbstoffe der Formel (1b), worin Fa einen Rest der Formel (4') darstellt, p 0 ist, D einen Rest der Formel

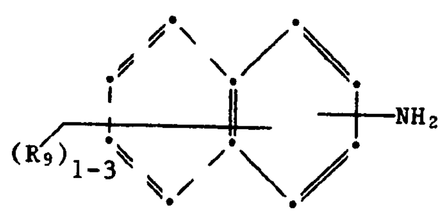

,

worin $R_9$ für 1 bis 3 gleiche oder verschiedene Reste ausgewählt aus der Gruppe Sulfo, Aminomethyl, β-Sulfatoethylsulfonyl und Vinylsulfonyl steht, bedeutet, und K der Rest von 1-Amino-8-hydroxynaphthalin-3,6- oder -4,6-disulfonsäure, 2-Amino-5-hydroxynaphthalin-7-sulfonsäure oder der Rest eines unsubstituierten oder durch Sulfo oder Ureido substituierten Anilins ist.

Des weiteren besonders bevorzugt sind solche Farbstoffe der Formel (1b), worin Fa ein Rest der Formel (5') ist, D für den Rest eines durch Sulfo, β-Sulfatoethylsulfonyl und/oder Vinylsulfonyl substituierten Aminobenzols steht, $D_1$ einen unsubstituierten oder durch Sulfo substituierten Rest eines Diaminobenzols bedeutet und $K_1$ der Rest von 1-Amino-8-hydroxy-3,6- oder -4,6-disulfonsäure ist.

Eine weitere Gruppe von besonders brauchbaren Reaktivfarbstoffen der Formel (1b) ist dadurch gekennzeichnet, dass Fa einen Rest der Forml

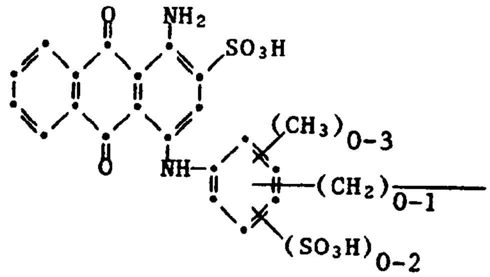

,

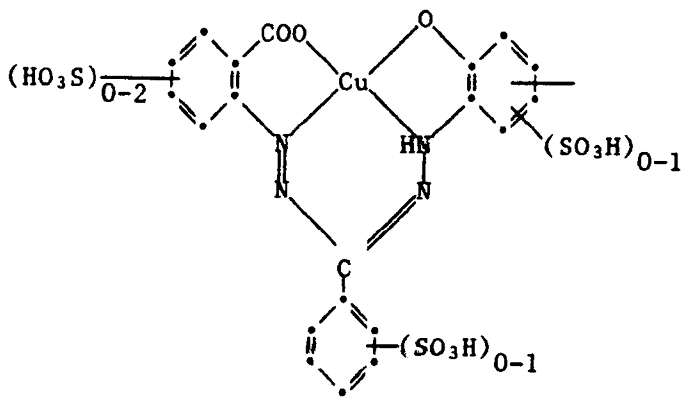

,

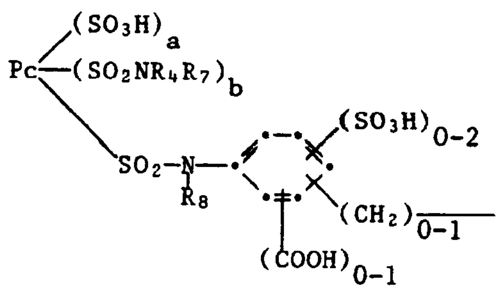

oder

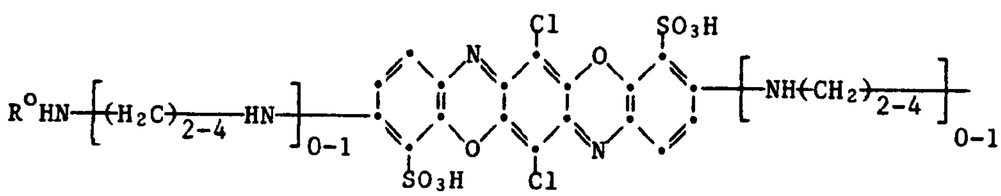

bedeutet, wobei Pc, $R_4$, $R_7$, $R_8$, a und b jeweils die zuvor unter der Formel (9) angegebene Bedeutung haben.

Die erfindungsgemässen Reaktivfarbstoffe können z.B. hergestellt werden, indem man organische Farbstoffe der Formel

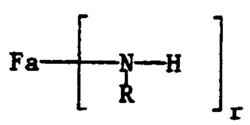

(10)

oder Farbstoffvorprodukte mit mindestens einem Aequivalent eines Pyrimidins der Formel

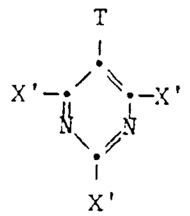

(11)

und mindestens einem Aequivalent eines Amins der Formel

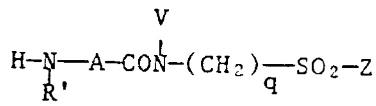

(2b)

oder der Formel

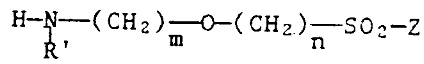

(3b)

in beliebiger Reihenfolge zu einem Reaktivfarbstoff der Formel (1) kondensiert, wobei Fa, R, R′, T, A, V, Z, m, n, q und r jeweils die zuvor angegebene Bedeutung haben und X′ jeweils die Bedeutung von X als Halogen hat, und dass man im Falle der Vewendung von Farbstoffvorprodukten diese in die gewünschten Endfarbstoffe umwandelt.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionenzwischen den einzelnen Reaktionskomponenten vorteilhafterweise sich nach den besonderen Bedingungen richtet. Da unter bestimmten Voraussetzungen Hydrolyse eines Halogenpyrimidinrestes eintritt, muss ein Zwischenprodukt, welches Acetylaminogruppen enthält, zwecks Abspaltung der Acetylgruppen verseift werden, bevor mit einem Halogenpyrimidin kondensiert wird. Welche Reaktion bei der Herstellung eines sekundären Kondensations-produktes aus einem Amin der Formel (2b) oder (3b), dem Pyrimidin der Formel (11) und dem organischen Farbstoff der Formel (10) oder einem Vorprodukt zweckmässigerweise zuerst ausgeführt wird, die des Pyrimidins mit dem Amin oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen. Als weitere Umwandlungsreaktion kommt eine nachträgliche Umsetzung am Rest X′ in Betracht. So kann z.B. durch Einwirkung eines Halogenierungsmittels ein Halogenatom gegen ein anderes ausgetauscht werden. Der Ersatz eines Halogenatoms X′ durch ein anderes Halogenatom kann in vielen Fällen auch vor der Kondensation des Pyrimidins der Formel (11) mit einem Farbstoff der Formel (10) oder einem Farbstoffvorprodukt erfolgen.

Ferner können Eliminierungsreaktionen an die Synthese angeschlossen werden. Beispielsweise kann man Reaktivfarbstoffe der Formel (1), welche Sulfatoethylsulfonylreste enthalten, mit halogenwasserstoffabspaltenden Mitteln, wie Natriumhydroxid, behandeln, wobei die Sulfatoethylsulfonylreste in Vinylsulfonylreste übergehen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest HO-$CH_2CH_2$— ist, herstellen und das Zwischenprodukt vor oder nach der Acylierung mit Schwefelsäure umsetzen, so dass die Hydroxygruppen in die Sulfatogruppe überführt wird ; oder man verwendet einen analogen Farbstoff, worin Z die Vinylgruppe $H_2C{=}CH$— ist, und lagert an das Zwischenprodukt Thioschwefelsäure an, wobei ein Rest $HO_3SS\text{-}CH_2CH_2$— entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispeilsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen unter alkalischen Bedingungen abspaltbaren Restes für Y in eine Verbindung der Formel (1) oder ein Zwischenprodukt anstelle der Sulfatogruppe, beispielsweise einer Thiosulfatogruppe erfolgt in an sich bekannter Weise. Der Weg der Herstellung über eine Zwischenstufe des Reaktivrestes geht in vielen Fällen einheitlich und vollständig.

Die Verfahrensvariante, bei welcher man von Farbstoffvorprodukten ausgeht, ist geeignet zur Herstellung von Reaktivfarbstoffen der Formel (1), worin Fa der Rest eines aus zwei oder mehr als zwei Komponenten zusammengesetzten Farbstoffes ist. Beispiele für derartige, aus zwei oder mehr als zwei Komponenten zusammengesetzte Farbstoffe sind : Monoazo-, Disazo-, Trisazo-, Metallkomplexazo-, Formazan- und Azomethinfarbstoffe. Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Falls man von Farbstoffvorprodukten ausgeht, gelangt man z.B. zu den Reaktivfarbstoffen der Formel (1), indem man eine Komponente des Farbstoffes der Formel (10), die eine Gruppe —N(R)H enthält, und ein Pyrimidin der Formel (11) kondensiert, vorher oder nachher mit einem Amin der Formel (2b) oder (3b) kondensiert, und mit der anderen Komponente des Farbstoffes der Formel (10) umsetzt. Bei der Herstellung der bevorzugten Azofarbstoffe müssen die Diazokomponenten und die Kupplungskomponenten zusammen mindestens eine Aminogruppe —N(R)H aufweisen und darüberhinaus die Diazokomponenten eine Aminogruppe —$NH_2$ enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino-oder Nitroverbindungen, worin die Acetylamino-bzw. Nitrogruppe vor der Kondensation mit dem 2,4,6-Trihalogen-pyrimidin durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem 2,4,6-Trihalogenpyrimidin der Formel (10) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxidative Kupferung in Betracht.

Die wichtigsten Verfahrensvarianten sind in den Ausführungsbeispielen dargestellt.

Die Verbindungen der Formel (10) sind bekannt oder können auf an sich bekannte Weise hergestellt werden. Eine Auswahl von brauchbaren Verbindungen der Formel (10) findet sich bei der Besprechung der bevorzugten Untergruppen der erfindungsgemässen Reaktivfarbstoffe.

Desgleichen sind die Pyrimidinverbindungen der Formel (11) z.B. aus der EP-A 141776 oder DE-A-2,310,334 bekannt.

Beispiele für geeignete Pyrimidinverbindungen der Formel (11) sind :

2,4,5,6-Tetrachlorpyrimidin, 2,4,5,6-Tetrafluorpyrimidin, 2,4,5,6-Tetrabrompyrimidin, 2,4,6-Trichlor-5-methylsulfinylpyrimidin, 2,4,6-Trifluor-5-methylsulfinylpyrimidin, 2,4,6-Tribrom-5-methylsulfinylpyrimidin, 2,4,6-Trichlor-5-ethylsulfinylpyrimidin, 2,4,6-Trichlor-5-n-propylsulfinylpyrimidin, 2,4,6-Trichlor-5-n-butylsulfinylpyrimidin, 2,4,6-Trichlor-5-isopropylsulfinylpyrimidin, 2,4,6-Trichlor-5-tert.-butylsulfinylpyrimidin, 2,4,6-Trichlor-5-methylsulfonyl-pyrimidin, 2,4,6-Tribrom-5-methylsulfonyl-pyrimidin, 2,4,6-Trifluor-5-methylsulfonylpyrimidin, 2,4,6-Trichlor-5-ethylsulfonyl-pyrimidin, 2,4,6-Trichlor-5-isopropylsulfonyl-pyrimidin, 2,4,6-Trichlor-5-n-butylsulfonyl-pyrimidin, 2,4,6-Trichlor-5-chlormethylsulfonyl-pyrimidin, 2,4,6-Trichlor-5-β-chlorethylsulfonyl-pyrimidin, 2,4,6-Trichlor-5-trifluormethylsulfonylpyrmidin, 2,4,6-Trichlor-5-perfluorbutyl-sulfonyl-pyrimidin, 2,4,6-Trichlor-5-ethoxymethyl-sulfonyl-pyrimidin, 2,4,6-Trifluor-5-ethoxyethylsulfonyl-pyrimidin, 2,4,6-Tribrom-5-isopropoxymethyl-sulfonyl-pyrimidin, 2,4,6-Trichlor-5-benzylsulfonyl-pyrimidin, 2,4,6-Tribrom-5-benzylsulfonyl-pyrimidin, 2,4,6-Trifluor-5-benzylsulfonylpyrimidin, 2,4,6-Trichlor-5-phenetylsulfonyl-pyrimidin, 2,4-Dichlor-6-brom-5-methylsulfonylpyrimidin, 2,4-Dichlor-6-fluor-5-methylsulfonyl-pyrimidin, 2,4-Dichlor-6-fluor-5-methylsulfonyl-pyrimidin, 2-Chlor-4,6-difluor-5-methylsulfonylpyrimidin, 2-Chlor-4,6-dibrom-5-methylsulfonyl-pyrimidin, 2-Brom-4,6-difluor-5-methylsulfonyl-pyrimidin, 2-Chlor-4,6-difluor-5-ethylsulfonylpyrimidin, 2,4,6-Trichlor-5-carboxypyrimidin, 2,4,6-Trifluor-5-carboxypyrimidin, 2,4,6-Trichlor-5-cyanpyrimidin, 2,4,6-Trichlor-5-formylpyrimidin.

Die Verbindungen der Formel (2b) sind z.B. aus der EP-A 214093 bekannt oder können analog dazu hergestellt werden. Beispiele für geeignete Verbindungen der Formel (2b) sind :
3-Aminobenzoesäure-N′-β-(β′-chlorethylsulfonyl)ethylamid,
4-Chlor-3-aminobenzoesäure-N′-β-(β′-chlorethylsulfonyl)-ethylamid,
4-Methyl-3-aminobenzoesäure-N′-β-(β′-chlorethylsulfonyl)-ethylamid,
4-Methoxy-3-aminobenzoesäure-N′-β-(β′-chlorethylsulfonyl)-ethylamid,
3-Aminobenzoesäure-N′-β-[β′-(-β″-chlorethylsulfonyl)-ethyloxy]-ethyl amid,
3-Aminobenzoesäure-N′-γ-(β′-chlorethylsulfonyl)-propylamid,
3-Aminobenzoesäure-N′-bis-[β-(β′-chlorethylsulfonyl)-ethyl]-amid,
3-Aminobenzoesäure-N′-bis-[γ-(β′-chlorethylsulfonyl)-propyl]-amid,
3-N-Ethylaminobenzoesäure-N′-β-(β′-chlorethylsulfonyl)-ethylamid,
3-N-Isopropylaminobenzoesäure-N′-β-(β′-chlorethylsulfonyl)-ethylamid,
3-N-Isopropylaminobenzoesäure-N′-γ-(β′-chlorethylsulfonyl)-propylamid,
4-Aminobenzoesäure-N′-β-(β′-chlorethylsulfonyl)-ethylamid,
4-Aminobenzoesäure-N′-β-[β′-(β″-chlorethylsulfonyl)-ethyloxy]-ethylamid,
4-Aminobenzoesäure-N′-γ-(β′-chlorethylsulfonyl)-propylamid,
4-Aminobenzoesäure-N′-bis-[β-(β′-chlorethylsulfonyl)-ethyl]-amid,
4-Aminobenzoesäure-N′-bis-[γ-(β′-chlorethylsulfonyl)-propyl]-amid,
4-N-Ethylaminobenzoesäure-N′-β-(β′-chlorethylsulfonyl)-ethylamid,
4-N-Isopropylaminobenzoesäure-N′-γ-(β′-chlorethylsulfonyl)-propylamid,
4-Aminobenzoesäure-N′-β-(vinylsulfonyl)-ethylamid,
4-Aminobenzoesäure-N′-bis-[β-(vinylsulfonyl)-ethyl]-amid,
4-Aminobenzoesäure-N′-δ-(β′-chlorethylsulfonyl)-butylamid,
4-Chlor-3-aminobenzoesäure-N′-bis-[β-(β′-chlorethylsulfonyl)-ethyl]amid,
4-Methyl-3-aminobenzoesäure-N′-bis-[β-(β′-chlorethylsulfonyl)-ethyl]amid,
4-Methoxy-3-aminobenzoesäure-N′-bis-[γ-(β′-chlorethylsulfonyl)propyl]-amid,
3-Aminobenzoesäure-N′-δ-(β′-chlorethylsulfonyl)-butylamid,
3-Aminobenzoesäure-N′-β-[β′-(β″-chlorethylsulfonyl)-ethyloxy]-ethylamid,
4-Hydroxy-3-aminobenzoesäure-N′-β-(β′-chlorethylsulfonyl)-ethylamid,
4-Hydroxy-3-aminobenzoesäure-N′-bis-[β-(β′-chlorethylsulfonyl)ethyl]-amid,
4-Methoxy-3-aminobenzoesäure-N′-bis-[β-(β′-chlorethylsulfonyl)ethyl]-amid.

Die Verbindungen der Formel (3b) sind z.B. aus der EP-A 144766 bekannt oder können analog dazu hergestellt werden.

Die erfindungsgemässen Reaktivfarbstoffe der Formel (1) eignen sich zum Färben und Bedrucken der verschiedensten Materialien, wie Seide, Leder, Wolle, Polyamidfasern und besonders cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemässen Reaktivfarbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die Farbstoffe der Formel (1) lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eins dispergierend wirkenden und die Diffusion der nicht fixierten Anteile fördernden Mittels gründlich gespült.

Die erfindungsgemässen Reaktivfarbstoffe zeichnen sich durch hohe Reaktivität, gutes Fixiervermögen und ein gutes Aufbauvermögen aus. Sie können daher nach dem Ausziehfärbeverfahren beiniedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Reaktivfarbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen der Formel (1) hergestellten Färbungen und Drucke auf Cellulosefasermaterialien besitzen eine hohe Farbstärke und eine hohe Faser-Farbstoff-Bindungsstabilität,

sowohl in saurem als auch in alkalischem Bereich, weiterhin eine gute Lichtechtheit und sehr gut Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumteilen im Verhältnis von Kilogramm zu Liter.

Beispiel 1 :

Zu einer neutralen Lösung von 25,3 Teilen des Aminoazofarbstoffes der Formel

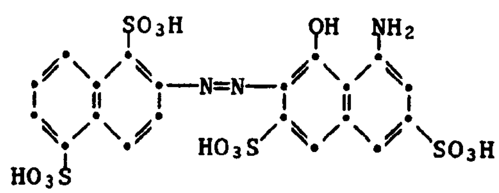

(12)

in 500 Teilen Wasser gibt man bei Raumtemperatur unter gutem Rühren 10,5 Teile 2,4,6-Trichlor-5-methylsulfonylpyrimidin gelöst in 40 Teilen Aceton hinzu und lässt das Ganze ca. 16 bis 20 Stunden bei dieser Temperatur rühren. Die Reaktionslösung wird dann mit 1n Natriumhydroxidlösung auf pH 7 gestellt und klärfiltriert. Anschliessend wird der Farbstoff der Formel

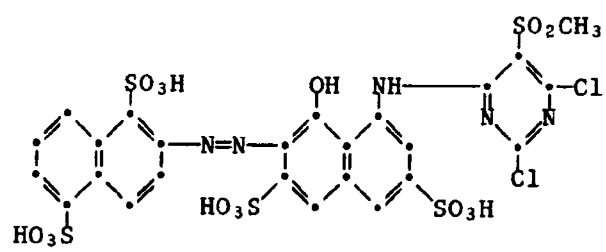

ausgesalzen und abfiltriert. Die so erhaltene Farbstoffpaste wird in 500 Teilen Wasser gelöst und langsam mit einer Lösung von 13,1 Teilen des Hydrochlorids von 1-Amino-3[β-(β'-chlorethylsulfonyl)-ethylaminocarbonyl]-benzol in 60 Teilen Wasser versetzt, wobei der pH-Wert der Lösung mit 1n Natriumhydroxidlösung bei ca. 7,0 gehalten wird.

Die Lösung des resultierenden Farbstoffes der Formel

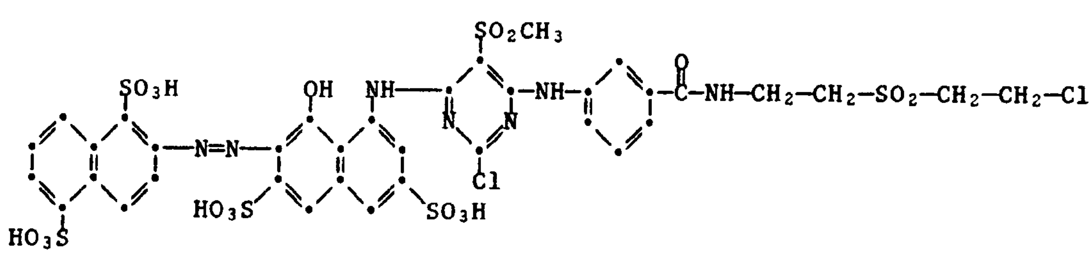

wird anschliessend mit 1n Natriumhydroxidlösung auf pH 11 gestellt und dann ca. 40 Minuten bei Raumtemperatur gehalten, wobei der Farbstoff in die Vinylform überführt wird. Man stellt den pH-Wert mit Salzsäure wieder auf 7, isoliert den Farbstoff der Formel

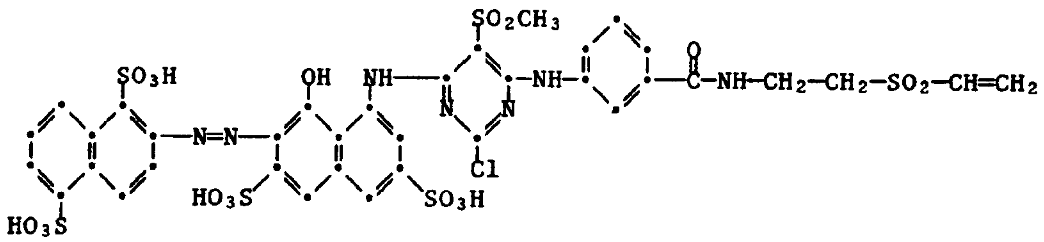

mit Kaliumchlorid und trocknet ihn im Vakuum.

Wird der erhaltene Farbstoff nach den für Vinylsulfonfarbstoffe üblichen Färbeverfahren auf Baumwolle appliziert, ergeben sich blaustichig rote Färbungen mit guten Allgemeinechtheiten ; $\lambda_{max}$ = 530 nm.

Beispiele 2-13 :

Verfährt man wie im Beispiel 1 beschrieben und verwendet anstelle des Farbstoffes der Formel (12) die in der Tabelle 1 genannten Farbstoffe, werden analoge Farbstoffe erhalten, die Baumwolle in den in der Tabelle angegebenen Nuancen färben.

Tabelle 1:

| Beispiel Nr. | Farbstoff | $\lambda_{max}$ [nm] | Nuance auf Baumwolle |
|---|---|---|---|
| 2 | 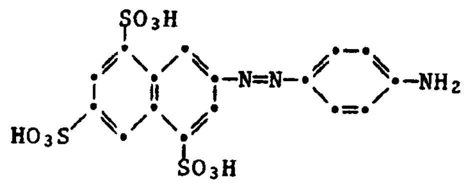 | 381 | gelb |
| 3 | 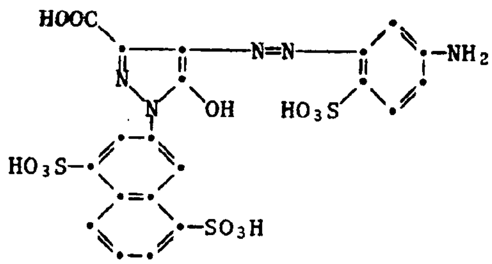 | 408 | gelb |
| 4 | 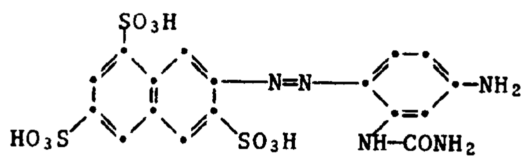 | 420 | gelb |
| 5 | 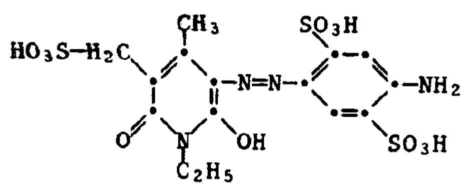 | 430 | gelb |
| 6 | 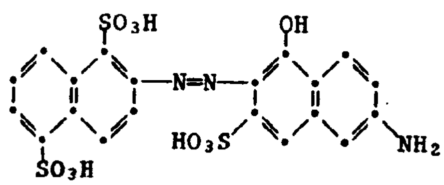 | 488 | orange |
| 7 | 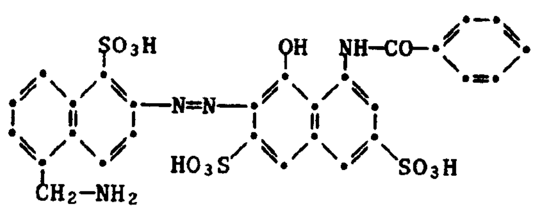 | 548 | rot |

Tabelle 1: (Fortsetzung)

| Beispiel Nr. | Farbstoff | $\lambda_{max}$ [nm] | Nuance auf Baumwolle |
|---|---|---|---|
| 8 | 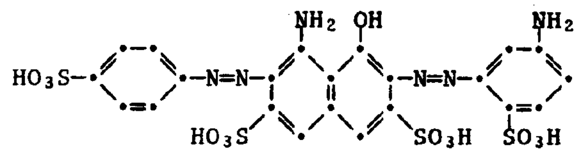 | 596 | marineblau |
| 9 | 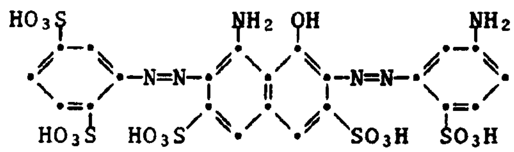 | 610 | marineblau |
| 10 | 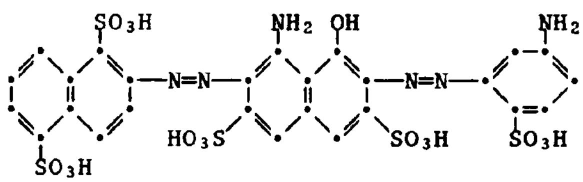 | 610 | marineblau |
| 11 | 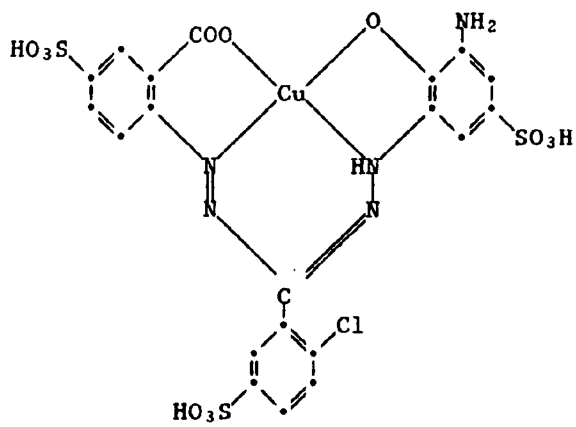 | 608 | blau |
| 12 | 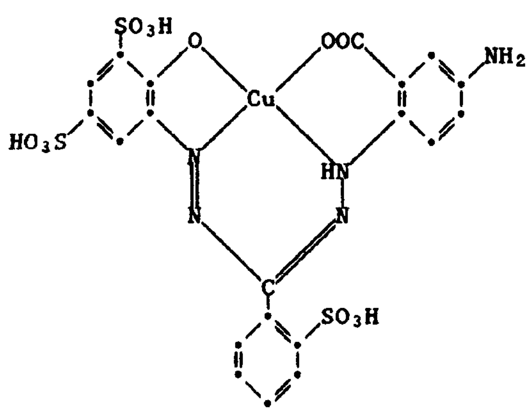 | 596 | blau |

Tabelle 1: (Fortsetzung)

| Beisp. Nr. | Farbstoff | $\lambda_{max}$ [nm] | Nuance auf Baumwolle |
|---|---|---|---|
| 13 | 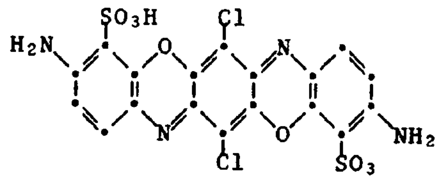 (nur eine Aminogruppe wird zur Reaktion gebracht) | 558 | blau |
| 14 | 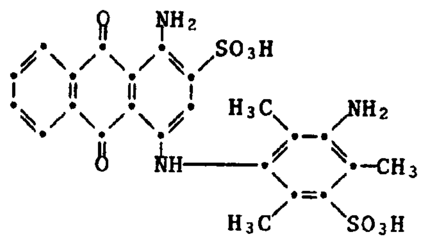 | 586 | blau |
| 15 | 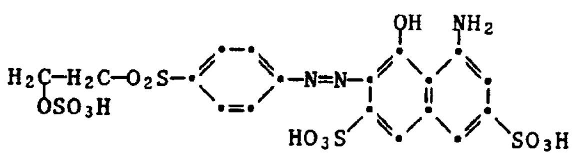 | 524 | rot |
| 16 | 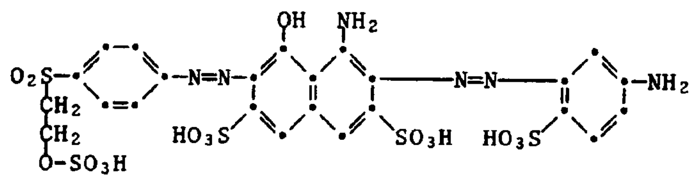 | 608 | marine |
| 17 | 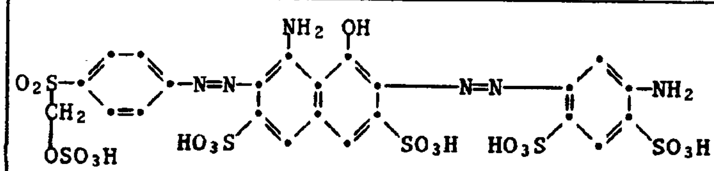 | 608 | marine |

Beispiel 18 :

16,4 Teile des Farbstoffes der Formel

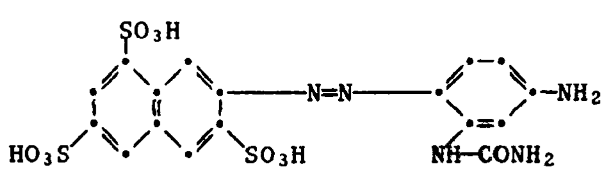

(13)

werden in 300 Teilen Wasser gelöst und auf 0-5°C abgekühlt. Bei dieser Temperatur gibt man unter gutem

Rühren eine Lösung von 6,4 Teilen 2,4,6-Trifluor-5-methylsulfonylpyrimidin in 50 Teilen Aceton hinzu und hält dabei den pH-Wert durch Zutropfen von 1n Natriumhydroxidlösung bei ca. 7,0.

Nach beendeter Umsetzung wird die Reaktionslösung mit einer Lösung von 9,8 Teilen des Hydrochlorids von 1-Amino-3-[β-(β'-chlorethylsulfonyl)-ethylaminocarbonyl]-benzoyl versetzt, wobei der pH-Wert der Lösung mit 1n Natriumhydroxidlösung bei ca. 7,0 gehalten wird.

Die wässrige Lösung des erhaltenen Farbstoffes wird anschliessend bei Raumtemperatur und pH 11 etwa 40 Minuten lang vinyliert. Dann wird der pH-Wert mit Salzsäure auf 7,0 zurückgestellt und der Farbstoff der Formel

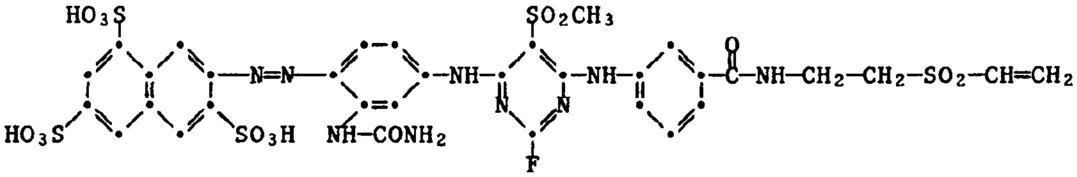

mit Kaliumchlorid ausgesalzen, abfiltriert und im Vakuum getrocknet. Wird der erhaltene Farbstoff nach den für Vinylsulfonfarbstoffe üblichen Verfahren auf Baumwolle appliziert, ergeben sich goldgelbe Färbungen mit guten Allgemeinechtheiten. $\lambda_{max}$ = 422 nm.

Beispiel 19 :

Verfährt man wie im Beispiel 18 beschrieben und verwendet anstatt des Farbstoffes der Formel (13) 16,6 Teile des Farbstoffes der Formel

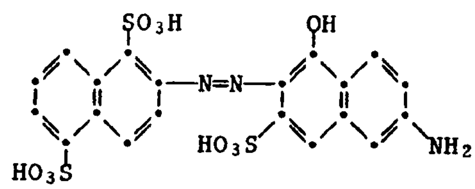

so erhält man den Farbstoff der Formel

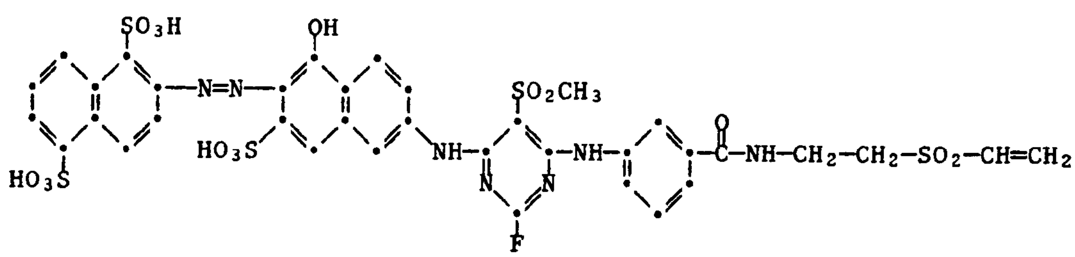

welcher Baumwolle in einer orangen Nuance mit guten Echtheiten färbt. $\lambda_{max}$ = 488 nm.

Beispiel 20 :

Zu einer neutralen Lösung von 28,1 Teilen des Disazofarbstoffes der Formel

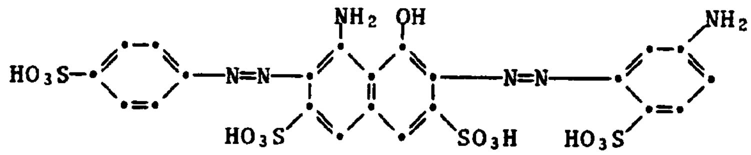

in 600 Teilen Wasser gibt man bei Raumtemperatur unter gutem Rühren eine Lösung von 8,4 Teilen 2,4,6-Trichlor-5-cyanpyrimidin in 40 Teilen Aceton und lässt das Ganze ca. 16-20 Stunden bei dieser Temperatur rühren. Dann wird der pH-Wert der Lösung mit 1n Natriumhydroxidlösung auf 7,0 zurückgestellt und eine Klärfiltration angeschlossen. Anschliessend tropft man zur Farbstofflösung eine Lösung von 13,1 Teilen des Hydrochlorids von 1-Amino-3-[β-(β'-chlorethylsulfonyl)-ethylaminocarbonyl]-benzol in 50 Teilen Wasser hinzu, wobei der pH-Wert des Reaktionsgemisches mit 1n Natriumhydroxidlösung bei ca. 7,0 gehalten wird.

Die wässrige Lösung des erhaltenen Farbstoffes wird bei Raumtemperatur und pH 11 etwa 40 Minuten lang vinyliert. Dann wird der pH-Wert mit Salzsäure auf 7,0 zurückgestellt und der Farbstoff der Formel

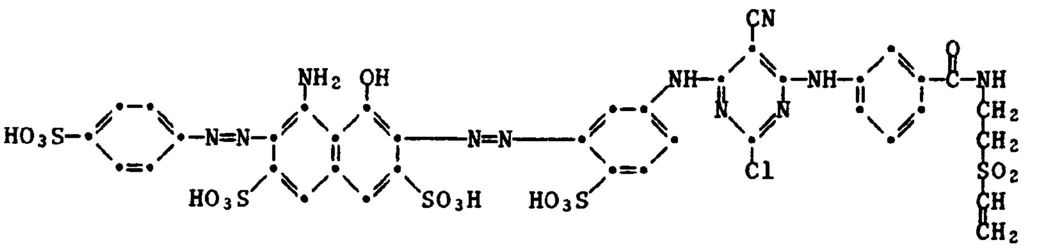

durch Zugabe von Kaliumchlorid abgeschieden, abfiltriert und im Vakuum getrocknet. Der so erhaltene Farbstoff färbt Baumwolle in einer marineblauen Nuance mit guten Allgemeinechtheiten. $\lambda_{max}$ = 596 nm.

Beispiel 21 :

13,6 Teile des Aminoazofarbstoffes der Formel

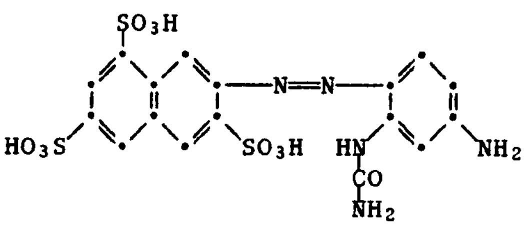

werden in 150 ml Wasser neutral gelöst und bei pH 6-6,5 und einer Temperatur von 0-5°C mit einer Lösung von 6 g 2,4,6-Trichlor-5-formylpyrimidin in 25 ml Aceton acyliert ; der pH wird hierbei durch Zutropfen von 2n-Natriumhydroxidlösung bei 6-6,5 gehalten. Die Farbstofflösung wird anschliessend klärfiltriert und mit einer Lösung von 8,6 Teilen des Hydrochlorids von 1-Amino-3[β-(β'-chlorethylsulfonyl)-ethylaminocarbonyl]-benzol in 150 ml Wasser bei pH 5,0-5,5 und einer Temperatur von 25°C umgesetzt. Anschliessend wird mit 2n-Natriumhydroxidlösung auf pH 10 gestellt und während 20 Minuten vinyliert. Der Farbstoff wird mit Kaliumchlorid ausgesalzen, filtriert und im Vakuum bei 30°C getrocknet. Der so erhaltene Farbstoff der Formel

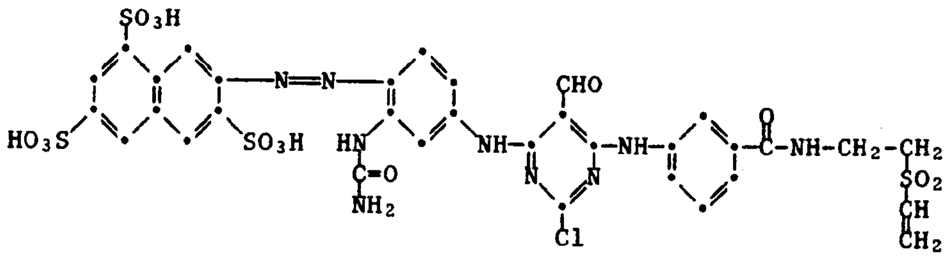

färbt Baumwolle in goldgelben Tönen ($\lambda_{max}$ 424 nm).

Beispiele 22-38 :

Verfährt man wie im Beispiel 21 beschrieben und verwendet anstelle des dort eingesetzten Aminoazofarbstoffes die in der Tabelle 2 genannten Farbstoffe, werden analoge Farbstoffe erhalten, die Baumwolle in den in der Tabelle angegebenen Nuancen färben.

Tabelle 2:

| Beispiel Nr. | Farbstoff | λ max [nm] | Nuance auf Baumwolle |
|---|---|---|---|
| 22 | 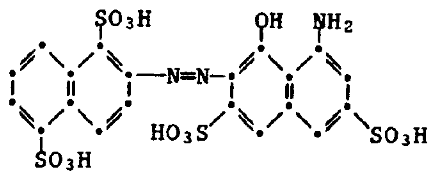 | 528 | blau-stichig rot |
| 23 | 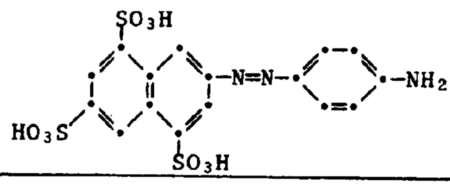 | 381 | gelb |
| 24 | 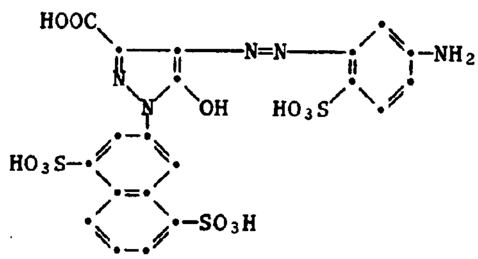 | 408 | gelb |
| 25 | 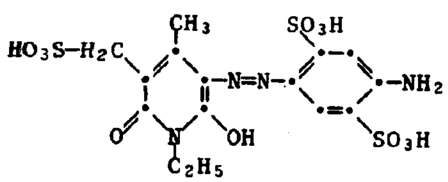 | 430 | gelb |
| 26 | 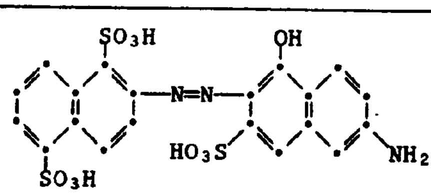 | 488 | orange |

Tabelle 2: (Fortsetzung)

| Beispiel Nr. | Farbstoff | $\lambda_{max}$ [nm] | Nuance auf Baumwolle |
|---|---|---|---|
| 27 | 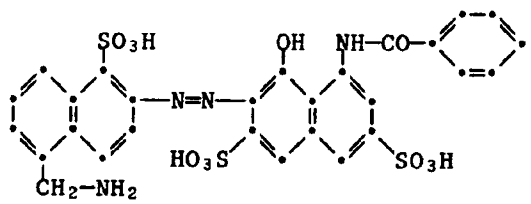 | 548 | rot |
| 28 | 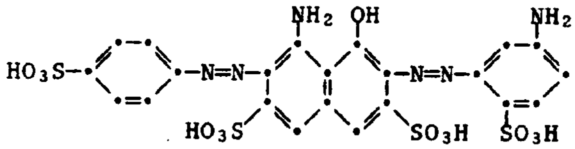 | 596 | marineblau |
| 29 | 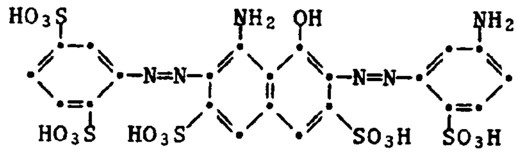 | 610 | marineblau |
| 30 | 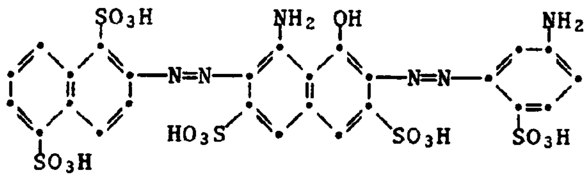 | 597 | marineblau |
| 31 | 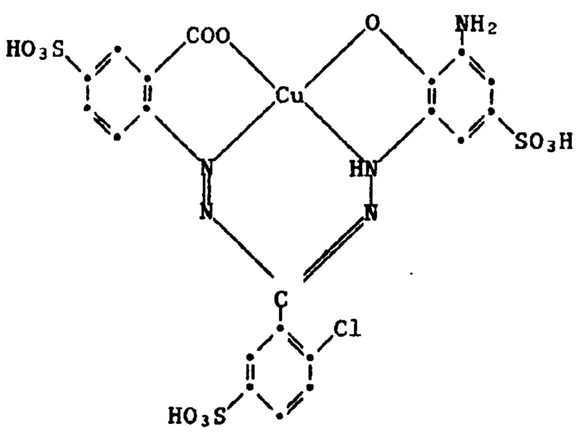 | 608 | blau |

Tabelle 2: (Fortsetzung)

| Bsp. Nr. | Farbstoff | $\lambda_{max}$ [nm] | Nuance auf Baumwolle |
|---|---|---|---|
| 32 | 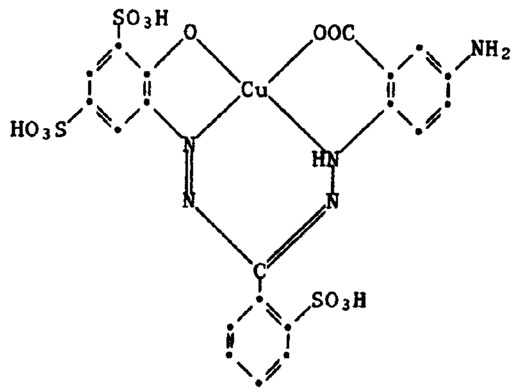 | 596 | blau |
| 33 | 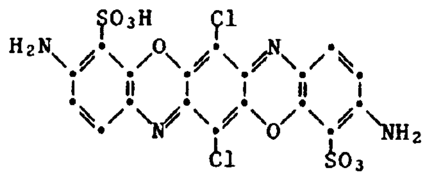 (nur eine Aminogruppe wird zur Reaktion gebracht) | 588 | blau |
| 34 | 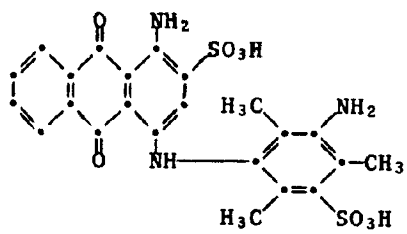 | 586 | blau |
| 35 | 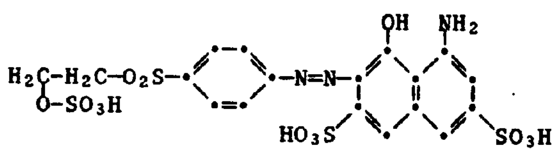 | 524 | rot |
| 36 | 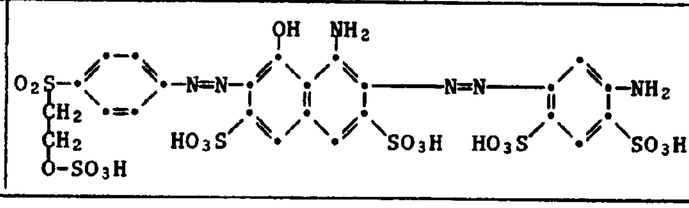 | 604 | marine |

Tabelle 2: (Fortsetzung)

| Bsp. Nr. | Farbstoff | $\lambda_{max}$ [nm] | Nuance auf Baumwolle |
|---|---|---|---|
| 37 | 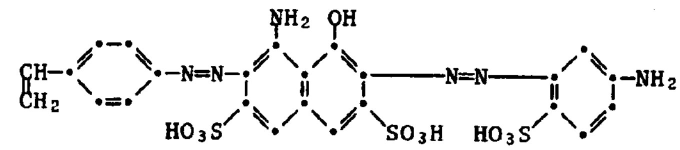 | 610 | marine |

Beispiel 38 :

Verfährt man wie im Beispiel 21 beschrieben und verwendet anstelle von 1-Amino-3[β-(β'-chlorethylsulfonyl)-ethylaminocarbonyl]-benzol die äquivalente Menge 1-Amino-4[β-(β'-chlorethylsulfonyl)-ethylaminocarbonyl]-benzol, erhält man den Farbstoff der Formel

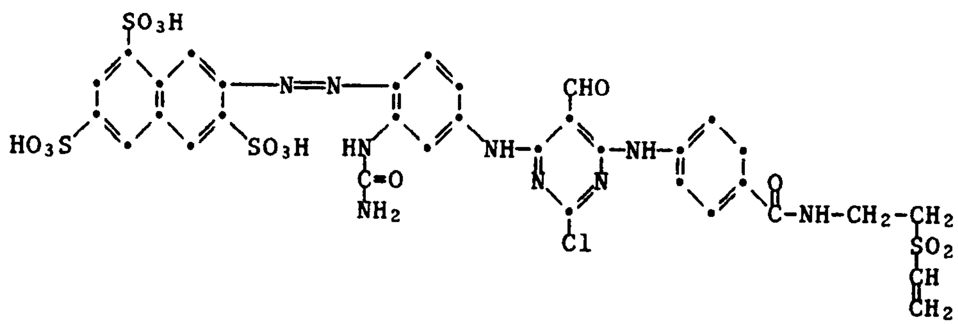

,

welcher Baumwolle ebenfalls in goldgelben Tönen färbt ($\lambda_{max}$ 420 nm).

Färbevorschrift I

2 Teile des gemäss Beispiel 1 erhaltenen Farbstoffes werden in 400 Teilen Wasser gelöst ; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxid und 20 g kalzinierte Soda enthält, zugegeben. Die Temperatur des Färbebades wird weitere 45 Minuten bei 40°C gehalten. Danach wird die gefärbt Ware gespült, während einer Viertelstunde mit einem nichtionogenen Waschmittel kochend geseift, nochmals gespült und getrocknet.

Färbevorschrift II

2 Teile des gemäss Beispiel 5 erhaltenen Reaktivfarbstoffes werden in 400 Teilen Wasser gelöst ; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxid und 20 g kalzinierte Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 6 erhaltenen Reaktivfarbstoffes werden in 400 Teilen Wasser gelöst ; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro

Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 7 erhaltenen Reaktivfarbstoffes werden in 50 Teilen Wasser gelöst. Dazu gibt man 50 Teile einer Lösung, die pro Liter 5 g Natriumhydroxid und 20 g kalzinierte Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 9 erhaltenen Reaktivfarbstoffes werden in 50 Teilen Wasser gelöst. Dazu gibt man 50 Teile einer Lösung, die pro Liter 16 g Natriumhydroxid und 0,04 Liter Wasserglas (38°Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 14 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxid und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 12 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 7 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel

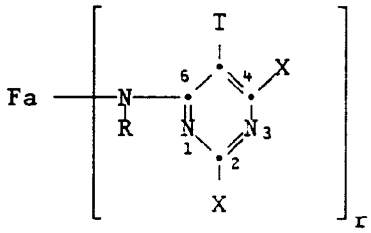

(1),

worin Fa der Rest eines organischen Farbstoffes der Monoazo- oder Polyazo-, Metallkomplexazo-, Anthrachinon-, Phthalocyanin-, Formazan-, Azomethin-, Dioxazin-, Phenazin-, Stilben-, Iriphenylmethan-, Xanthen-, Ihioxanthon-, Nitroaryl-, Naphthochinon-, Pyrenchinon- oder Perylentetracarbimid-Reihe ist,
T Nitro, Cyano, $C_1$-$C_4$-Alkylsulfonyl, Carboxy, Chlor, $C_1$-$C_4$-Alkoxysulfonyl, $C_1$-$C_4$-Alkylsulfinyl, $C_1$-$C_4$-Alkoxycarbonyl oder $C_1$-$C_4$-Alkanoyl bedeutet,
ein X Halogen und das andere X eine Gruppe der Formel

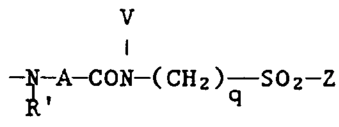

(2)

oder der Formel

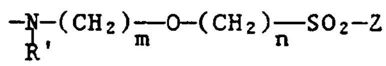

(3)

ist,

| | |
|---|---|
| A | Arylen bedeutet, |
| V | Wasserstoff, ein unsubstituierter oder durch Halogen, Hydroxy, Cyano, Carboxy, Sulfo, Sulfato, $C_1$-$C_4$-Alkoxycarbonyl oder $C_1$-$C_4$-Alkoxy substituierter $C_1$-$C_4$-Alkylrest oder ein Rest der Formel $-(CH_2)_q-SO_2-Z$ ist, |
| Z | einen Rest $-CH=CH_2$ oder $-CH_2-CH_2-Y$ darstellt und Y ein unter alkalischen Bedingungen abspaltbarer anorganischer oder organischer Rest ist, |
| q, m und n | unabhängig voneinander eine ganze Zahl von 2 bis 6 bedeuten, |
| R und R′ | unabhängig voneinander für Wasserstoff oder unsubstituiertes oder durch Halogen, Hydroxy, Cyano, Carboxy, Sulfo, Sulfato, $C_1$-$C_4$-Alkoxycarbonyl oder $C_1$-$C_4$-Alkoxy substituiertes $C_1$-$C_4$-Alkyl stehen und r = 1 oder 2 ist. |

2. Reaktivfarbstoffe gemäss Anspruch 1, dadurch gekennzeichnet, dass r = 1 ist.

3. Reaktivfarbstoffe gemäss Anspruch 1 oder 2, dadurch gekennzeichnet, dass T Cyano, Methyl- oder Ethylsulfonyl oder Formyl ist.

4. Reakivfarbstoffe gemäss einem der Ansprüche 1 bis 3, dadurch gekennzeichnet, dass T Methylsulfonyl ist.

5. Reaktivfarbstoffe gemäss einem der Anspüche 1 bis 3, dadurch gekennzeichnet, dass T Formyl ist.

6. Reaktivfarbstoffe gemäss einem der Ansprüche 1 bis 5, dadurch gekennzeichnet, dass das Halogenatom X Chlor oder Fluor ist.

7. Reaktivfarbstoffe gemäss einem der Ansprüche 1 bis 6, dadurch gekennzeichnet, dass R und R′ unabhängig voneinander Wasserstoff, Methyl oder Ethyl sind.

8. Reaktivfarbstoffe gemäss einem der Ansprüche 1 bis 7, dadurch gekennzeichnet, dass Fa unsubstituiert oder durch $C_1$-$C_4$-Alkyl, $C_1$-$C_4$-Alkoxy, $C_1$-$C_4$-Alkanoylamino, Benzoylamino, Amino, unsubstituiertes oder im Alkylteil durch $-OH$, $-OCOCH_3$, $-OSO_3H$, $-CN$ oder Halogen substituiertes N-Mono- oder N,N-Di-$C_1$-$C_4$-Alkylamino, Phenylamino, Mono- oder Di-Sulfobenzylamino, $C_1$-$C_4$-Alkoxycarbonyl, $C_1$-$C_4$-Alkylsulfonyl, Trifluormethyl, Nitro, Cyano, Halogen, Carbamoyl, N-Mono- oder N,N-Di-$C_1$-$C_4$-Alkylcarbamoyl, Sulfamoyl, N-Mono-oder N,N-Di-$C_1$-$C_4$-Alkylsulfamoyl, N-Mono- oder N,N-Di-(β-Hydroxyethyl)-sulfamoyl, N-Phenylsulfamoyl, Hydroxy, Carboxy, Sulfo, Sulfomethyl und/oder Ureido substituiert ist.

9. Reaktivfarbstoffe gemäss einem der Ansprüche 1 bis 8, dadurch gekennzeichnet, dass Fa für den Rest eines organischen Farbstoffes der Mono- oder Polyazo-, Metallkomplexazo-, Anthrachinon-, Phthalocyanin-, Formazan- oder Dioxazinreihe, welcher durch einen oder mehrere der im Anspruch 8 genannten Reste substituiert ist, steht.

10. Reaktivfarbstoffe gemäss einem der Ansprüche 1 bis 9, dadurch gekennzeichnet, dass Fa für den Rest eines Mono- oder Disazofarbstoffes, welcher durch einen oder mehrere Reste, ausgewählt aus der Gruppe Methyl, Ethyl, Methoxy, Ethoxy, Acetylamino, Benzoylamino, Amino, Chlor, Brom, Ureido, Hydroxy, Carboxy, Sulfomethyl und Sulfo, substituiert ist, steht.

11. Reaktivfarbstoffe gemäss einem der Ansprüche 1 bis 10, dadurch gekennzeichnet, dass ein X Halogen ist und das andere X eine Gruppe der Formel

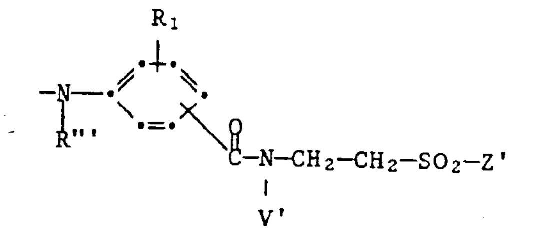

(2a)

oder der Formel

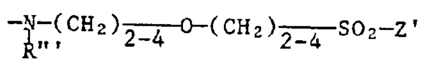

(3a),

worin R‴ und V′ unabhängig voneinander Wasserstoff oder $C_1$-$C_4$-Alkyl bedeuten, $R_1$ Wasserstoff, Sulfo, Ureido, Chlor, Methyl, Ethyl, Methoxy, Ethoxy, Hydroxy oder Carboxy ist, Z′ eine Gruppe $-CH=CH_2$ oder $-CH_2$-$CH_2$-Y′ darstellt und Y′ für $-OSO_3H$, $-SSO_3H$, $-OCOCH_3$, $-OPO_3H_2$, —Cl oder $-OCO$-$C_6H_5$ steht, ist.

12. Reaktivfarbstoffe gemäss einem der Ansprüche 1 bis 11 der Formel

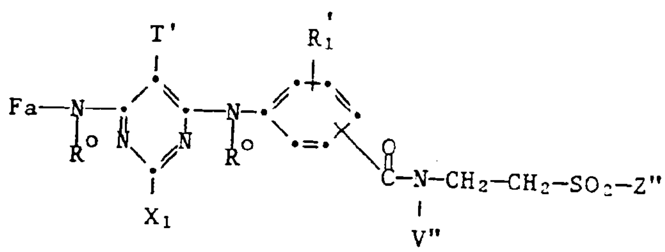

(1b),

worin Fa die im Anspruch 1 angegebene Bedeutung hat, T′ für Methyl-sulfonyl, Formyl oder Cyano steht, $X_1$ Chlor oder Fluor bedeutet, R° und V″ unabhängig voneinander Wasserstoff, Methyl oder Ethyl sind, $R'_1$ Wasserstoff, Sulfo, Ureido oder Carboxy bedeutet und Z″ eine Gruppe $-CH=CH_2$, $-CH_2$-$CH_2$-$OSO_3H$, $-CH_2$-$CH_2$-Cl oder $-CH_2$-$CH_2$-$OCOCH_3$ darstellt.

13. Reaktivfarbstoffe gemäss einem der Ansprüche 1 bis 11 der Formel

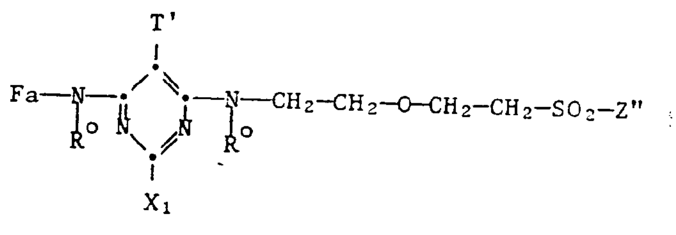

(1c),

worin Fa, R°, $X_1$, T′ und Z″ die im Anspruch 12 angegebene Bedeutung haben.

14. Reaktivfarbstoffe der Formel (1) gemäss Anspruch 1, worin Fa für den Rest eines organischen Farbstoffes der Mono- oder Polyazo-, Metallkomplexazo-, Anthrachinon-, Phthalocyanin-, Formazan- oder Dioxazinreihe, welcher eine oder mehrere Sulfogruppen trägt und gegebenenfalls durch einen oder mehrere der im Anspruch 8 genannten reste weitersubstituiert ist, steht, R Wasserstoff oder einen unsubstituierten oder durch Halogen, Hydroxy, Cyano, Carboxy, Sulfo, Sulfato, $C_1$-$C_4$-Alkoxycarbonyl oder $C_1$-$C_4$-Alkoxy substituierten $C_1$-

$C_4$-Alkylrest darstellt, T für Cyano, Nitro, Chlor, Formyl, Methylsulfonyl oder Ethylsulfonyl steht, ein X Chlor oder Fluor und das andere X eine Gruppe der im Anspruch 11 angegebenen Formel (2a) bedeutet und r = 1 ist.

15. Reaktivfarbstoffe gemäss Anspruch 1 der Formel

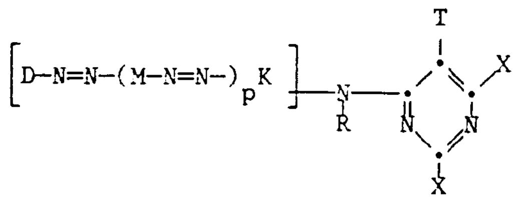

(4)

oder

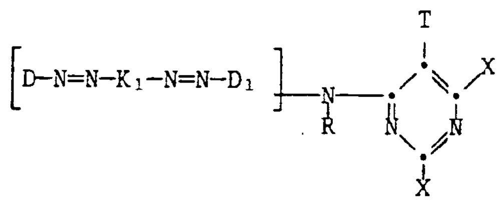

(5),

worin R, T und X die im Anspruch 1 angegebene Bedeutung haben, D und $D_1$ unabhängig voneinander eine Diazokomponente der Benzol- oder Naphthalinreihe darstellen, M eine Mittelkomponente der Benzol oder Naphthalinreihe ist, K für eine Kupplungskomponente der Benzol- oder Naphthalinreihe oder der heterocyclischen Reihe steht, $K_1$ der Rest einer Kupplungskomponente der Aminonaphtholsulfonsäure-Reihe ist und p 0 oder 1 bedeutet.

16. Reaktivfarbstoffe gemäss Anspruch 1, dadurch gekennzeichnet, dass es sich um Metallkomplexe von Mono- oder Disazofarbstoffen der im Anspruch 15 angegebenen Formeln (4) oder (5) handelt.

17. Reaktivfarbstoffe gemäss Anspruch 1 der Formel

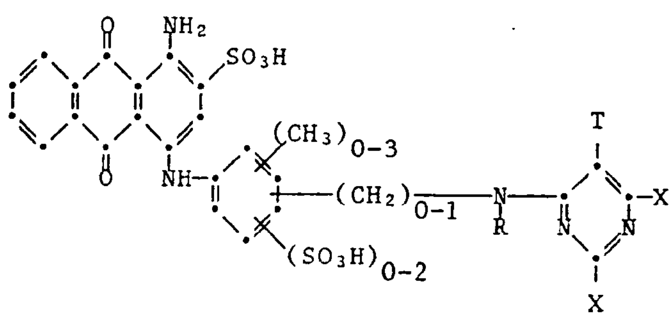

(6),

worin R, T und X die im Anspruch 1 angegebene Bedeutung haben.

18. Reaktivfarbstoffe gemäss Anspruch 1 der Formel

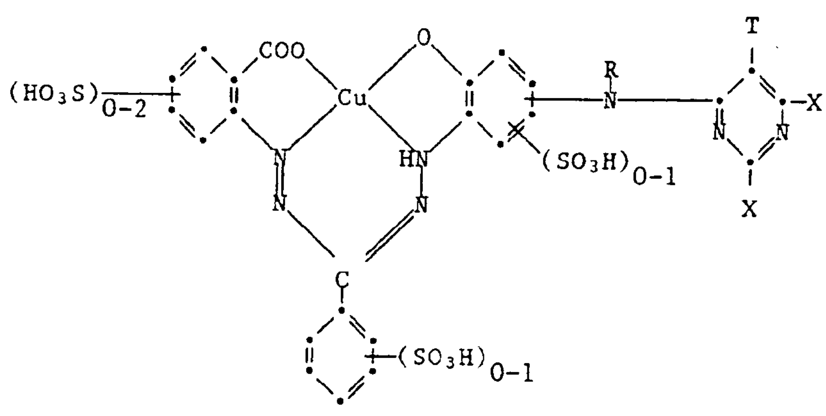

(7),

worin R, T und X die im Anspruch 1 angegebene Bedeutung haben.

19. Reaktivfarbstoffe gemäss Anspruch 1 der Formel

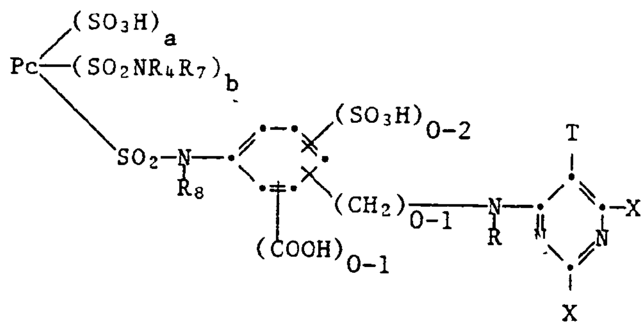

(8),

worin Pc der Rest eines Cu- oder Ni-Phthalocyanins ist, $R_4$, $R_7$ und $R_8$ unabhängig voneinander Wasserstoff oder $C_1$-$C_4$-Alkyl bedeuten, a und b ganze oder gebrochene Zahlen von 1 bis 3 sind, wobei a und b zusammen 3,0 ergeben und R, T und X jeweils die im Anspruch 1 angegebene Bedeutung haben.

20. Reaktivfarbstoffe der Formel (1) gemäss Anspruch 1, dadurch gekennzeichnet, das Fa ein Rest eines Dioxazinfarbstoffes der Formel

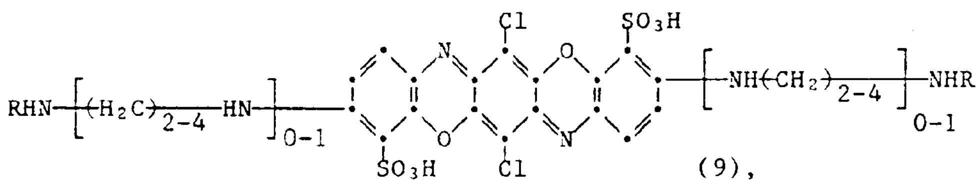

(9),

worin R die im Anspruch 1 angegebene Bedeutung hat, ist.

21. Verfahren zur Herstellung von Reaktivfarbstoffen der Formel (1) gemäss Anspruch 1, dadurch gekennzeichnet, dass man organische Farbstoffe der Formel

$$Fa\left[-\underset{R}{N}-H\right]_r \qquad (10)$$

oder Farbstoffvorprodukte mit mindestens einem Aequivalent eines Pyrimidins der Formel

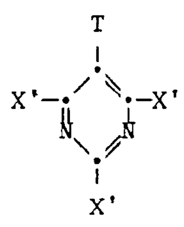

(11)

und mindestens einem Aequivalent eines Amins der Formel

$$H-\underset{R'}{N}-A-CO\overset{V}{N}-(CH_2)_q-SO_2-Z \qquad (2b)$$

oder der Formel

$$H-\underset{R'}{N}-(CH_2)_m-O-(CH_2)_n-SO_2-Z \qquad (3b)$$

in beliebiger Reihenfolge zu einem Reaktivfarbstoff der Formel (1) kondensiert, wobei Fa, R, R′, T, A, V, Z, m, n, q und r jeweils die zuvor angegebene Bedeutung haben und X′ jeweils die Bedeutung von X als Halogen hat, und dass man im Falle der Verwendung von Farbstoffvorprodukten diese in die gewünschten Endfarbstoffe umwandelt.

22. Verwendung der Reaktivfarbstoffe gemäss Anspruch 1 zum Färben und Bedrucken von cellulosehaltigen Fasermaterialien.

23. Verwendung gemäss Anspruch 22 zum Färben und Bedrucken von Baumwolle.

24. Reaktivfarbstoffe der Formel (1b) gemäss Anspruch 12, dadurch gekennzeichnet, dass Fa ein Rest der Formel

$$[D - N = N - (M - N = N -)_p K]- \quad (4') \text{ oder}$$

$$[D - N = N - K_1 - N = N - D_1]- \quad (5'),$$

worin D, $D_1$, M, K, $K_1$ und p die im Anspruch 15 angegebene Bedeutung haben, ist.

25. Reaktivfarbstoffe gemäss Anspruch 24, dadurch gekennzeichnet, dass Fa einen Rest der Formel (4′) darstellt, p 0 ist, D ein Rest der Formel

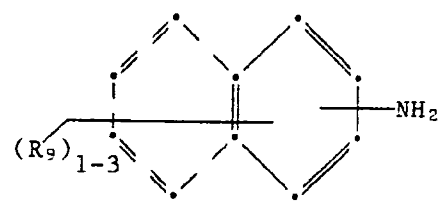

worin $R_9$ für 1 bis 3 gleiche oder verschiedene Reste ausgewählt aus der Gruppe Sulfo, Aminomethyl, β-Sulfatoethylsulfonyl und Vinylsulfonyl steht, ist, und K den Rest von 1-Amino-8-hydroxynaphthalin-3,6- oder -4,6-disulfonsäure, 2-Amino-5-hydroxynaphthalin-7-sulfonsäure oder eines unsubstituierten oder durch Sulfo oder Ureido substituierten Anilins bedeutet.

26. Reaktivfarbstoffe gemäss Anspruch 24, dadurch gekennzeichnet, dass Fa einen Rest der Formel (5′) darstellt, D der Rest eines durch Sulfo, β-Sulfatoethylsulfonyl und/oder Vinylsulfonyl substituierten Aminobenzols ist, $D_1$ einen unsubstituierten oder durch Sulfo substituierten Rest eines Diaminobenzols bedeutet und $K_1$ der Rest von 1-Amino-8-hydroxy-3,6- oder -4,6-disulfonsäure ist.

27. Reaktivfarbstoffe der Formel (1b) gemäss Anspruch 12, dadurch gekennzeichnet, dass Fa ein Rest der Formel

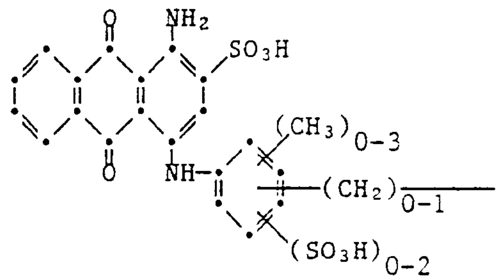

,

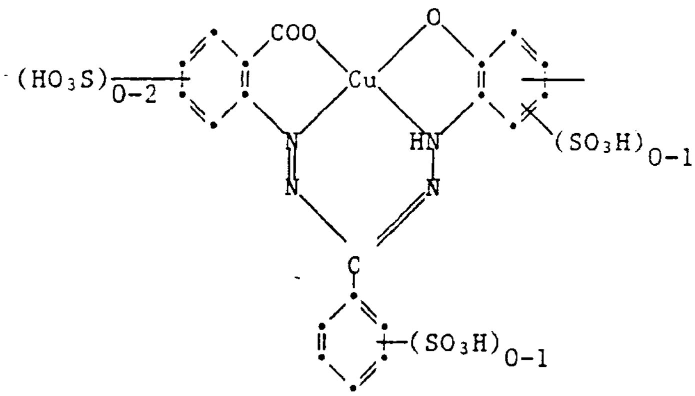

,

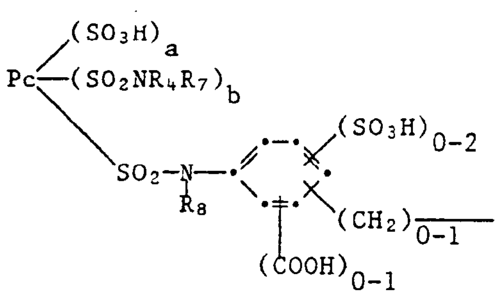

oder

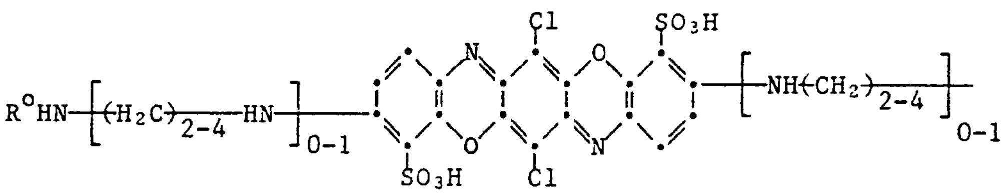

ist und Pc, $R_4$, $R_7$, $R_8$, a und b die im Anspruch 19 angegebene Bedeutung haben.

## Claims

1. A reactive dye of the formula

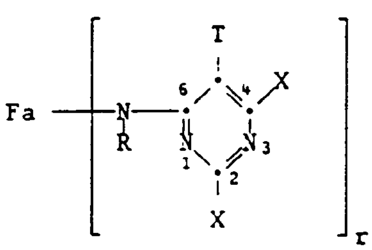

(1),

in which Fa is the radical of an organic dye of the monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series, T is nitro, cyano, $C_1$-$C_4$alkyl-

sulfonyl, carboxyl, chlorine, $C_1$-$C_4$alkoxysulfonyl, $C_1$-$C_4$alkylsulfinyl, $C_1$-$C_4$alkoxycarbonyl or $C_1$-$C_4$alkanoyl, one X is halogen and the other X is a group of the formula

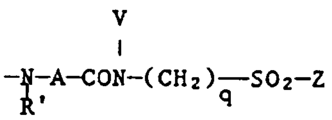

(2)

or of the formula

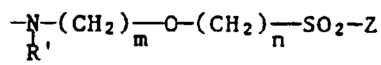

(3)

A is arylene, V is hydrogen, a $C_1$-$C_4$alkyl radical which is unsubstituted or substituted by halogen, hydroxyl, cyano, carboxyl, sulfo, sulfato, $C_1$-$C_4$alkoxycarbonyl or $C_1$-$C_4$alkoxy, or a radical of the formula $-(CH_2)_q-SO_2Z$, Z is a $-CH{=}CH_2$ or $-CH_2-CH_2-Y$ radical and Y is an inorganic or organic radical which is detachable under alkaline conditions, q, m and n are independently of one another an integral number from 2 to 6, R and R′ are independently of one another hydrogen or $C_1$-$C_4$alkyl which is unsubstituted or substituted by halogen, hydroxyl, cyano, carboxyl, sulfo, sulfato, $C_1$-$C_4$alkoxycarbonyl or $C_1$-$C_4$alkoxy, and r is 1 or 2.

2. A reactive dye according to claim 1, in which r is 1.

3. A reactive dye according to claim 1 or 2, in which T is cyano, methysulfonyl, ethylsulfonyl or formyl.

4. A reactive dye according to any one of claims 1 to 3, in which T is methylsulfonyl.

5. A reactive dye according to any one of claims 1 to 3, in which T is formyl.

6. A reactive dye according to any one of claims 1 to 5, in which the halogen atom X is chlorine or fluorine.

7. A reactive dye according to any one of claims 1 to 6, in which R and R′ are independently of one another hydrogen, methyl or ethyl.

8. A reactive dye according to any one of claims 1 to 7, in which Fa is unsubstituted or substituted by $C_1$-$C_4$alkyl, $C_1$-$C_4$alkoxy, $C_1$-$C_4$-alkanoylamino, benzoylamino, amino, N-mono- or N,N-di-$C_1$-$C_4$alkylamino which is unsubstituted or substituted in the alkyl moiety by $-OH$, $-OCOCH_3$, $-OSO_3H$, $-CN$ or halogen, phenylamino, mono- or disulfobenzylamino, $C_1$-$C_4$-alkoxycarbonyl, $C_1$-$C_4$alkylsulfonyl, trifluoromethyl, nitro, cyano, halogen, carbamoyl, N-mono- or N,N-di-$C_1$-$C_4$alkylcarbamoyl, sulfamoyl, N-mono- or N,N-di-$C_1$-$C_4$alkylsulfamoyl, N-mono- or N,N-di-(β-hydroxyethyl)sulfamoyl, N-phenylsulfamoyl, hydroxyl, carboxyl, sulfo, sulfomethyl and/or ureido.

9. A reactive dye according to any one of claims 1 to 8, in which Fa is the radical of an organic dye of the monoazo, polyazo, metal complex azo, anthraquinone, phthalocyanine, formazan or dioxazine series which is substituted by one or more of the radicals mentioned in claim 8.

10. A reactive dye according to any one of claims 1 to 9, in which Fa is the radical of a monoazo or disazo dye which is substituted by one or more radicals selected from the group consisting of methyl, ethyl, methoxy, ethoxy, acetylamino, benzoylamino, amino, chlorine, bromine, ureido, hydroxyl, carboxyl, sulfomethyl and sulfo.

11. A reactive dye according to any one of claims 1 to 10, in which one X is halogen and the other X is a group of the formula

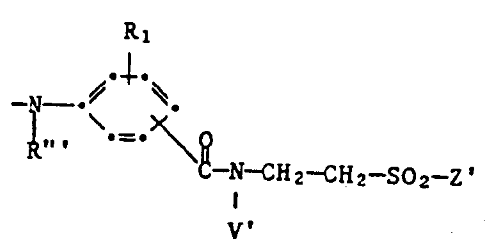

(2a)

or of the formula

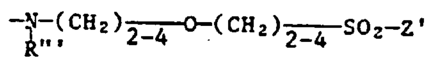
(3a),

in which R‴ and V′ are independently of one another hydrogen or $C_1$-$C_4$alkyl, $R_1$ is hydrogen, sulfo, ureido, chlorine, methyl, ethyl, methoxy, ethoxy, hydroxyl or carboxyl, Z′ is a $—CH=CH_2$ or $—CH_2$-$CH_2$-Y′ group, and Y′ is $—OSO_3H$, $—SSO_3H$, $—OCOCH_3$, $—OPO_3H_2$, —Cl or $—OCO$-$C_6$-$H_5$.

12. A reactive dye according to any one of claims 1 to 11, of the formula

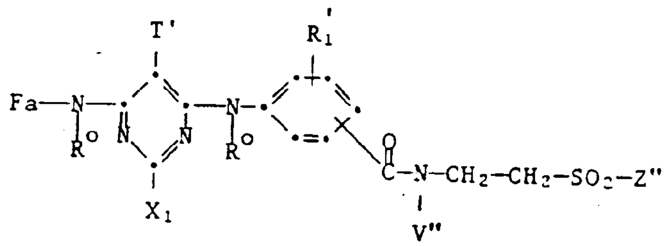
(1b),

in which Fa is as defined in claim 1, T′ is methylsulfonyl, formyl or cyano, $X_1$ is chlorine or fluorine, R° and V″ are independently of one another hydrogen, methyl or ethyl, $R'_1$ is hydrogen, sulfo, ureido or carboxyl, and Z″ is a $—CH=CH_2$, $—CH_2$-$CH_2$-$OSO_3H$, $—CH_2$-$CH_2$-Cl or $—CH_2$-$CH_2$-$OCOCH_3$ group.

13. A reactive dye according to any one of claims 1 to 11, of the formula

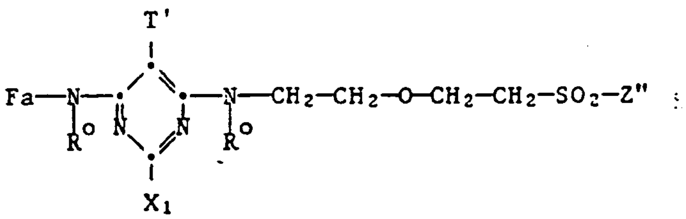
(1c),

in which Fa, R°, $X_1$, T′ and Z″ are as defined in claim 12.

14. A reactive dye of the formula (1) according to claim 1, in which Fa is the radical of an organic dye of the monoazo, polyazo, metal complex azo, anthraquinone, phthalocyanine, formazan or dioxazine series which carries one or more sulfo groups and optionally can be further substituted by one or more of the radicals mentioned in claim 8, R is hydrogen or an unsubstituted or halogen-, hydroxyl-, cyano-, carboxyl-, sulfo-, sulfato-, $C_1$-$C_4$alkoxycarbonyl- or $C_1$-$C_4$alkoxy-substituted $C_1$-$C_4$alkyl radical, T is cyano, nitro, chlorine, formyl, methylsulfonyl or ethylsulfonyl, one X is chlorine or fluorine and the other X is a group of the formula (2a) indicated in claim 11, and r is 1.

15. A reactive dye according to claim 1, of the formula

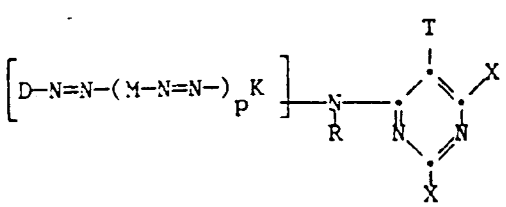
(4)

or

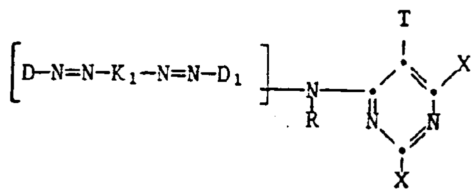

(5),

in which R, T and X are as defined in claim 1, D and $D_1$ independently of one another are a diazo component of the benzene or naphthalene series, M is a central component of the benzene or naphthalene series, K is a coupling component of the benzene or naphthalene series or of the heterocyclic series, $K_1$ is the radical of a coupling component of the aminonaphtholsulfonic acid series, and p is 0 or 1.

16. A reactive dye according to claim 1, which comprises a metal complex of a monoazo or disazo dye of the formula (4) or (5) indicated in claim 15.

17. A reactive dye according to claim 1, of the formula

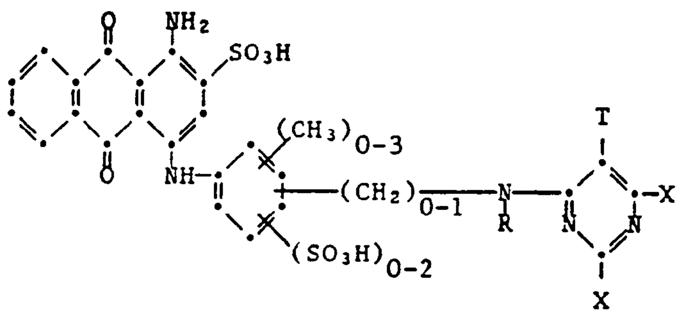

(6),

in which R, T and X are as defined in claim 1.

18. A reactive dye according to claim 1, of the formula

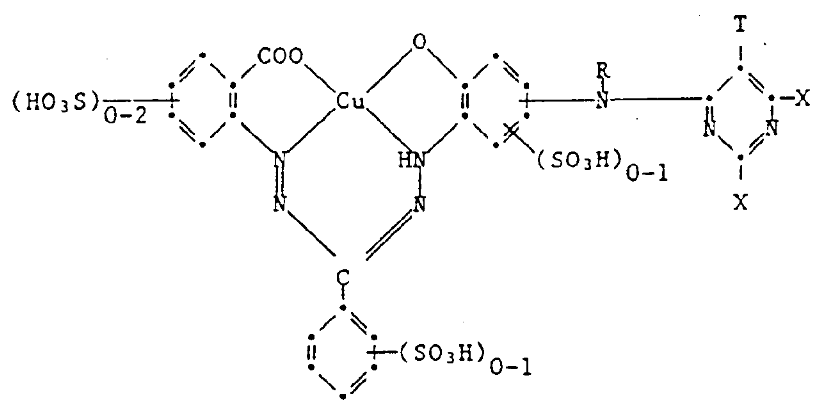

(7),

in which R, T and X are as defined in claim 1.

19. A reactive dye according to claim 1, of the formula

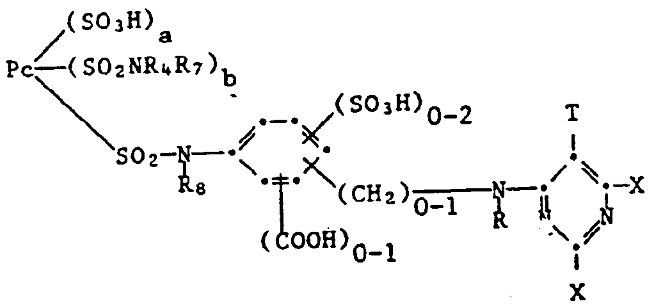

(8),

in which Pc is the radical of a Cu- or Ni-phthalocyanine, $R_4$, $R_7$ and $R_8$ are independently of one another hydrogen or $C_1$-$C_4$alkyl, a and b are integral or fractional numbers from 1 to 3, a and b together being 3.0, and R, T and X are each as defined in claim 1.

20. A reactive dye of the formula (1) according to claim 1, in which Fa is a radical of a dioxazine dye of the formula

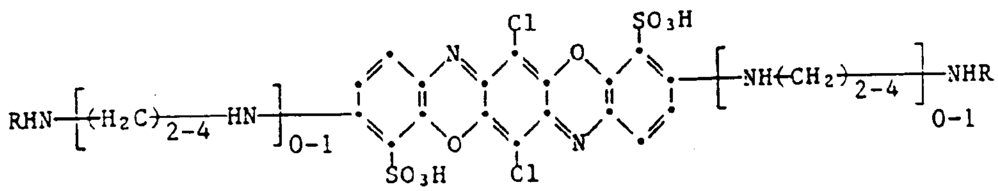

(9),

in which R is as defined in claim 1.

21. A process for preparing a reactive dye of the formula (1) according to claim 1, which comprises condensing an organic dye of the formula

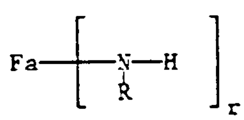

(10)

or a dye precursor with at least one equivalent of a pyrimidine of the formula

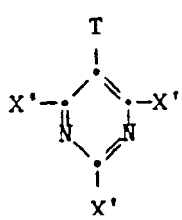

(11)

and at least one equivalent of an amine of the formula

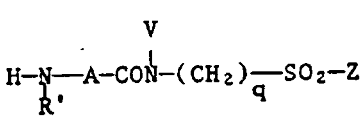

(2b)

or of the formula

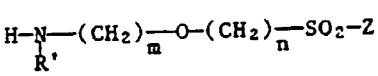

(3b)

in any desired order to give a reactive dye of the formula (1), Fa, R, R', T, A, V, Z, m, n, q and r each being as defined above and X' being defined in each case as a halogen X and, if a dye precursor has been used, converting it into the desired final dye.

22. Use of a reactive dye according to claim 1, for dyeing and printing cellulose-containing fibre materials.

23. Use according to claim 22, for dyeing and printing cotton.

24. A reactive dye of the formula (1b) according to claim 12, in which Fa is a radical of the formula

$$[D-N=N-(M-N=N-)_p K]- \quad (4')$$

or

$$[D-N=N-K_1-N=N-D_1]- \quad (5')$$

in which D, $D_1$, M, K, $K_1$ and p are as defined in claim 15.

25. A reactive dye according to claim 24, in which Fa is a radical of the formula (4'), p is 0, D is a radical of the formula

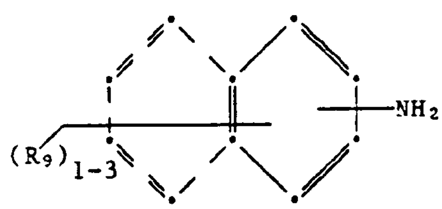

in which $R_9$ is 1 to 3 identical or different radicals selected from the group consisting of sulfo, aminomethyl, β-sulfatoethylsulfonyl and vinylsulfonyl, and K is the radical of 1-amino-8-hydroxyphthalene-3,6- or -4,6-disulfonic acid, of 2-amino-5-hydroxynaphthalene-7-sulfonic acid or of an unsubstituted or sulfo- or ureido-substituted aniline.

26. A reactive dye according to claim 24, in which Fa is a radical of the formula (5'), D is the radical of a sulfo-, β-sulfatoethylsulfonyl- and/or vinylsulfonyl-substituted aminobenzene, $D_1$ is an unsubstituted or sulfo-substituted radical of a diaminobenzene, and $K_1$ is the radical of 1-amino-8-hydroxy-3,6- or -4,6-disulfonic acid.

27. A reactive dye of the formula (1b) according to claim 12, in which Fa is a radical of the formula

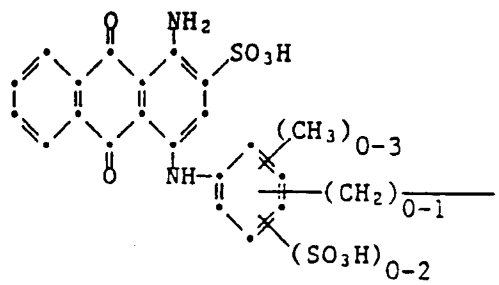

,

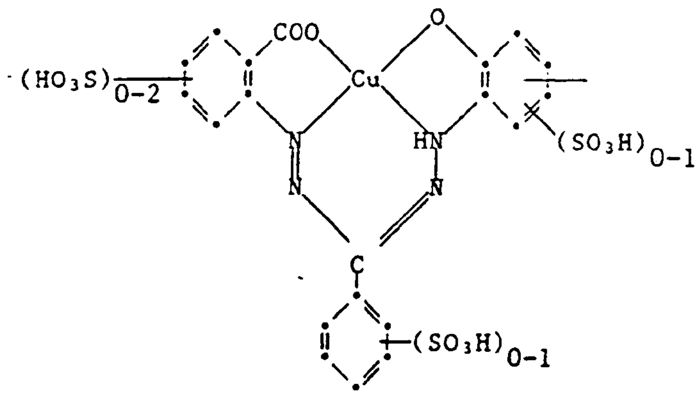

,

or

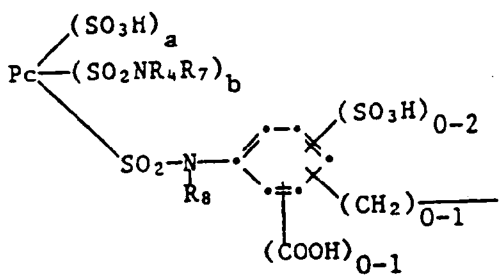

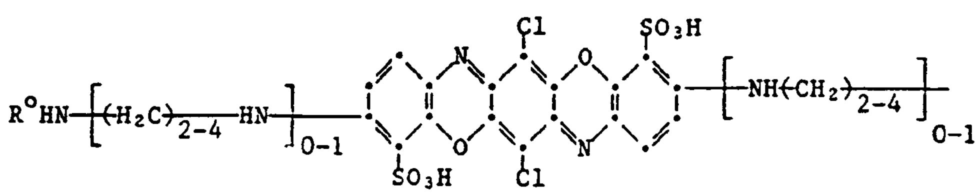

and Pc, $R_4$, $R_7$, $R_8$, a and b are as defined in claim 19.

## Revendications

1. Colorants réactifs répondant à la formule

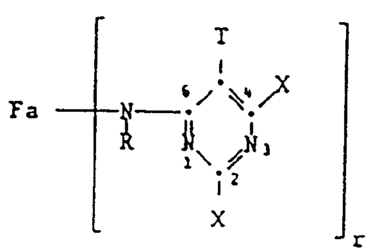

(1)

dans laquelle Fa représente le reste d'un colorant organique de la série monoazoïque ou polyazoïque, complexe métal-azoïque, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide,
T représente un groupe nitro, cyano, (alcoyle en $C_1$-$C_4$)-sulfonyle, carboxy, un atome de chlore, un groupe (alcoxy en $C_1$-$C_4$)-sulfonyle, (alcoyle en $C_1$-$C_4$)-sulfinyle, (alcoxy en $C_1$-$C_4$)-carbonyle ou alcanoyle en $C_1$-$C_4$, un des X représente un atome d'halogène et l'autre X représente un groupe répondant à la formule

$$-\underset{R'}{N}-A-CO\overset{V}{N}-(CH_2)_q-SO_2-Z \qquad (2)$$

ou à la formule

$$-\underset{R'}{N}-(CH_2)_m-O-(CH_2)_n-SO_2-Z \qquad (3)$$

| | |
|---|---|
| A | représente un groupe arylène, |
| V | représente un atome d'hydrogène, un reste alcoyle en $C_1$-$C_4$, non substitué ou substitué par un halogène, par un groupe hydroxy, cyano, carboxy, sulfo, sulfato, (alcoxy en $C_1$-$C_4$)-carbonyle ou alcoxy en $C_1$-$C_4$, ou un reste répondant à la formule $-(CH_2)_q-SO_2-Z$, |
| Z | représente un reste $-CH=CH_2$ ou $-CH_2-CH_2-Y$, et Y est un reste inorganique ou organique pouvant être séparé dans des conditions alcalines, |
| q, m et n | représentent, indépendamment les uns des autres, un nombre entier valant de 2 à 6, |
| R et R′ | représentent, indépendamment l'un de l'autre, un atome d'hydrogène ou un groupe alcoyle en $C_1$-$C_4$, non substitué ou substitué par un halogène, par un groupe hydroxy, cyano, carboxy, sulfo, sulfato, (alcoxy en $C_1$-$C_4$)-carbonyle ou alcoxy en $C_1$-$C_4$, et r = 1 ou 2. |

2. Colorants réactifs selon la revendication 1, caractérisés en ce que r = 1.

3. Colorants réactifs selon la revendication 1 ou 2, caractérisés en ce que T représente un groupe cyano, méthyl- ou éthylsulfonyle ou formyle.

4. Colorants réactifs selon l'une des revendications 1 à 3, caractérisés en ce que T représente le méthylsulfonyle.

5. Colorants réactifs selon l'une des revendications 1 à 3, caractérisés en ce que T représente le formyle.

6. Colorants réactifs selon l'une des revendications 1 à 5, caractérisés en ce que l'atome d'halogène X est du chlore ou du fluor.

7. Colorants réactifs selon l'une des revendications 1 à 6, caractérisés en ce que R et R′ représentent, indépendamment l'un de l'autre, un atome d'hydrogène, le méthyle ou l'éthyle.

8. Colorants réactifs selon l'une des revendications 1 à 7, caractérisés en ce que Fa est non substitué ou est substitué par un groupe alcoyle en $C_1$-$C_4$, alcoxy en $C_1$-$C_4$, alcanoylamino en $C_1$-$C_4$, benzoylamino, amino, N-mono- ou N,N-di-(alcoyle en $C_1$-$C_4$)-amino, non substitué ou substitué dans le motif alcoyle par $-OH$, $-OCOCH_3$, $-OSO_3H$, $-CN$ ou par un halogène, phénylamino, mono- ou disulfobenzylamino, (alcoxy en $C_1$-$C_4$)-carbonyle, alcoylsulfonyle en $C_1$-$C_4$, trifluorométhyle, nitro, cyano, halogéno, carbamoyle, N-mono- ou N,N-di-(alcoyle en $C_1$-$C_4$)-carbamoyle, sulfamoyle, N-mono- ou N,N-di-(alcoyle en $C_1$-$C_4$)-sulfamoyle, N-mono- ou N,N-di-(β-hydroxyéthyl)-sulfamoyle, N-phénylsulfamoyle, hydroxy, carboxy, sulfo, sulfométhyle et/ou uréido.

9. Colorants réactifs selon l'une des revendications 1 à 8, caractérisés en ce que Fa représente le reste d'un colorant organique de la série mono- ou polyazoïque, complexe métal-azoïque, anthraquinone, phtalocyanine, formazan ou dioxazine, ce reste étant substitué par un ou plusieurs des restes indiqués dans la revendication 8.

10. Colorants réactifs selon l'une des revendications 1 à 9, caractérisés en ce que Fa représente le reste d'un colorant mono- ou disazoïque, qui est substitué par un ou plusieurs restes qu'on choisit dans le groupe comprenant les restes méthyle, éthyle, méthoxy, éthoxy, acétylamino, benzoylamino, amino, chloro, bromo, uréido, hydroxy, carboxy, sulfométhyle et sulfo.

11. Colorants réactifs selon l'une des revendications 1 à 10, caractérisés en ce que l'un des X est un atome d'halogène et l'autre X est un groupe répondant à la formule

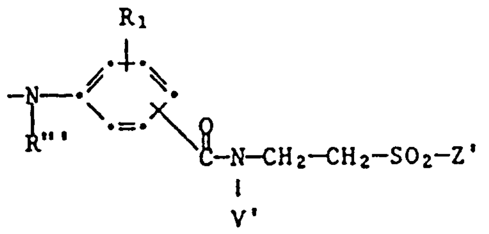

(2a)

ou à la formule

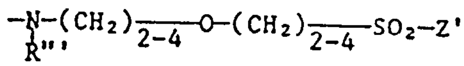

(3a),

dans lesquelles R‴ et V′ représentent, indépendamment l'un de l'autre, un atome d'hydrogène ou un groupe alcoyle en $C_1$-$C_4$, $R_1$ représente un atome d'hydrogène, un groupe sulfo, uréido, un atome de chlore, le méthyle, l'éthyle, ou un groupe méthoxy, éthoxy, hydroxy ou carboxy, Z′ représente un groupe —$CH{=}CH_2$ ou —$CH_2$-$CH_2$-Y′, et Y′ représente —$OSO_3H$, —$SSO_3H$, —$OCOCH_3$, —$OPO_3H_2$, —Cl ou —$OCO$-$C_6H_5$.

12. Colorants réactifs selon l'une des revendications 1 à 11, répondant à la formule

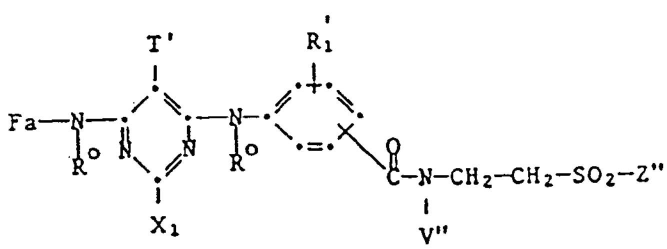

(1b)

Fa ayant la signification indiquée dans la revendication 1, T′ représentant un groupe méthylsulfonyle, formyle ou cyano, X, représentant un atome de chlore ou de fluor, R° et V″ représentant, indépendamment l'un de l'autre, un atome d'hydrogène, le méthyle ou l'éthyle, $R'_1$, représentant un atome d'hydrogène, un groupe sulfo, uréido ou carboxy, et Z″ représentant un groupe —$CH{=}CH_2$, —$CH_2$-$CH_2$-$OSO_3H$, —$CH_2$-$CH_2$-Cl ou —$CH_2$-$CH_2$-$OCOCH_3$.

13. Colorants réactifs selon l'une des revendications 1 à 11, répondant à la formule

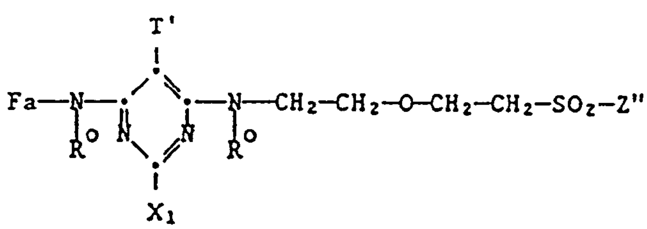

(1c)

Fa, R°, $X_1$, T′ et Z″ ayant les significations indiquées dans la revendication 12.

14. Colorants réactifs de formule (1) selon la revendication 1, formule dans laquelle Fa représente le reste d'un colorant organique de la série mono- ou polyazoïque, complexe métal-azoïque, anthraquinone, phtalocyanine, formazan ou dioxazine, lequel reste comporte un ou plusieurs groupes sulfoniques et, éventuellement, est substitué en outre par un ou plusieurs des restes indiqués dans la revendication 8, R représente un atome d'hydrogène ou un reste alcoyle en $C_1$-$C_4$, non substitué ou substitué par un halogène, un groupe hydroxy, cyano, carboxy, sulfo, sulfato, (alcoxy en $C_1$-$C_4$)-carbonyle ou par alcoxy en $C_1$-$C_4$, T représente un groupe cyano, nitro, un atome de chlore, le formyle, le méthylsulfonyle ou l'éthylsulfonyle, un des X représente un atome de chlore ou de fluor et l'autre X représente un groupe répondant à la formule (2a) indiquée dans la revendication 11, et r = 1.

15. Colorants réactifs selon la revendication 1, répondant à la formule

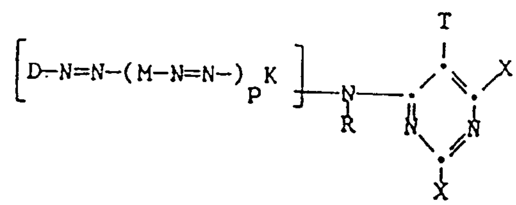

(4)

ou

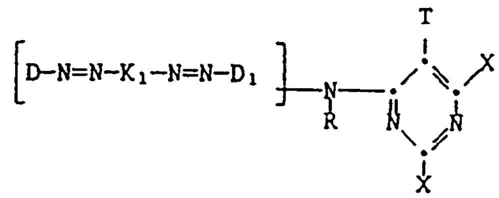

(5)

dans lesquelles R, T et X ont les significations indiquées dans la revendication 1, D et $D_1$ représentent, indépendamment l'un de l'autre, un composant diazo de la série du benzène ou du naphtalène, M représente un composant intermédiaire de la série du benzène ou du naphtalène, K représente un copulant de la série du benzène ou du naphtalène ou de la série hétérocyclique, $K_1$ représente le reste d'un copulant de la série de l'acide aminonaphtolsulfonique, et p vaut 0 ou 1.

16. Colorants réactifs selon la revendication 1, caractérisés en ce qu'il s'agit de complexes de métal et de colorants mono- ou disazoïques répondant à la formule (4) ou (5) indiquée dans la revendication 15.

17. Colorants réactifs selon la revendication 1, répondant à la formule :

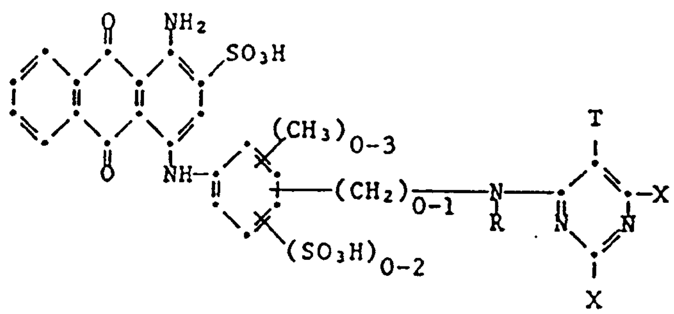

(6)

dans laquelle R, T et X ont les significations indiquées dans la revendication 1.

18. Colorants réactifs selon la revendication 1, répondant à la formule :

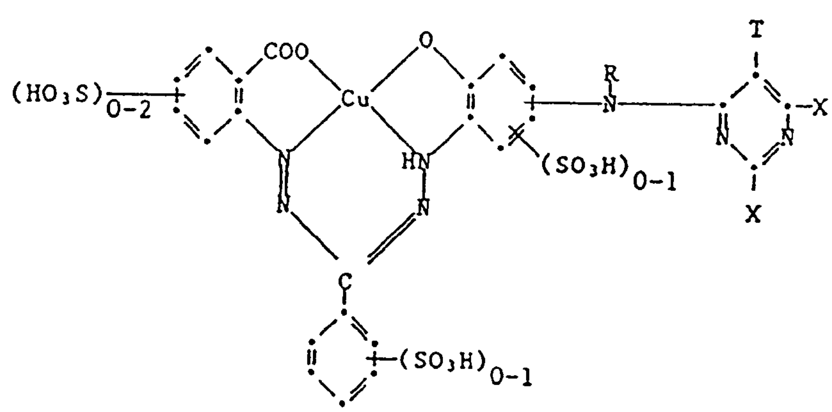

(7)

dans laquelle R, T et X ont les significations indiquées dans la revendication 1.

19. Colorants réactifs selon la revendication 1, répondant à la formule :

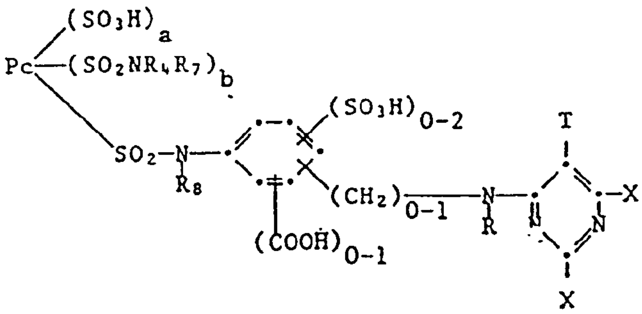

(8)

dans laquelle Pc représente le reste d'une Cu- ou Ni-phtalocyanine, $R_4$, $R_7$ et $R_8$ représentent, indépendamment les uns des autres, un atome d'hydrogène ou un groupe alcoyle en $C_1$-$C_4$, a et b sont des nombres entiers ou fractionnaires valant de 1 à 3, la somme de a et b étant 3,0, et R, T et X ont chacun la signification indiquée dans la revendication 1.

20. Colorants réactifs de formule (1) selon la revendication 1, caractérisés en ce que Fa représente un reste d'un colorant dioxazine répondant à la formule

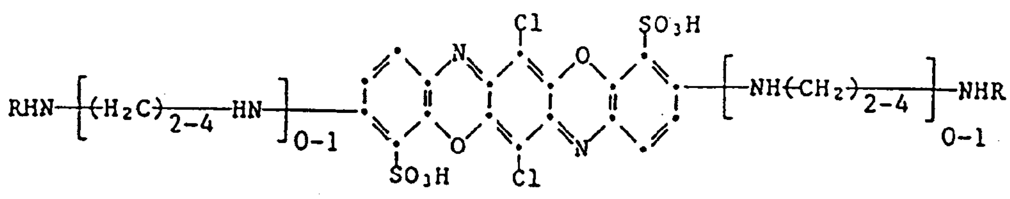

(9)

dans laquelle R a la signification indiquée dans la revendication 1.

21. Procédé de préparation de colorants réactifs de formule (1) selon la revendication 1, caractérisé en ce que l'on condense un colorant organique de formule

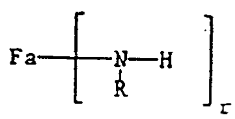

(10)

ou un précurseur de colorant, avec au moins un équivalent d'une pyrimidine de formule

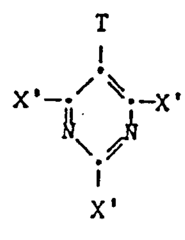

(11)

et au moins un équivalent d'une amine de formule

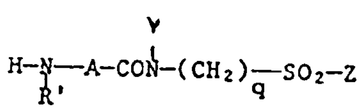

(2b)

ou de formule

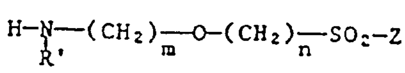

(3b)

dans un ordre quelconque, en un colorant réactif de formule (1), Fa, R, R', T, A, V, Z, m, n, q et r ayant chacun

la signification indiquée précédemment, et chaque X′ a la signification de X en tant qu'halogène et, lorsqu'on utilise des précurseurs de colorant, on transforme ceux-ci en les colorants finaux souhaités.

22. Utilisation des colorants réactifs selon la revendication 1 pour teindre et imprimer des matières fibreuses contenant de la cellulose.

23. Utilisation selon la revendication 22 pour teindre et imprimer du coton.

24. Colorants réactifs de formule (1b) selon la revendication 12, caractérisés en ce que Fa représente un reste répondant à la formule

$$[D - N = N - (M - N = N -)_p K ] - \quad (4') \text{ ou}$$

$$[D - N = N - K_1 - N = N - D_1 ] - \quad (5'),$$

D, $D_1$, M, K, $K_1$ et p ayant les significations indiquées dans la revendication 15.

25. Colorants réactifs selon la revendication 14, caractérisés en ce que Fa représente un reste répondant à la formule (4′), p vaut 0, D représente un reste répondant à la formule

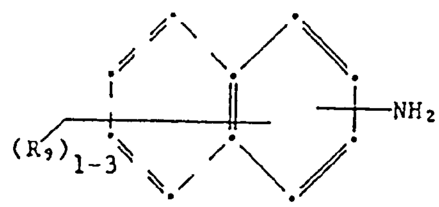

dans laquelle $R_9$ représente 1 à 3 restes identiques ou différents, choisis dans le groupe comprenant les restes sulfo, aminométhyle, β-sulfatoéthylsulfonyle et vinylsulfonyle, et K représente le reste de l'acide 1-amino-8-hydroxynaphtalène-3,6- ou -4,6-disulfonique, de l'acide 1-amino-5-hydroxynaphtalène-7-sulfonique ou d'une aniline non substituée ou substituée par sulfo ou uréido.

26. Colorants réactifs selon la revendication 24, caractérisés en ce que Fa représente un reste répondant à la formule (5′), D représente le reste d'un aminobenzène substitué par un groupe sulfo, β-sulfatoéthylsulfonyle et/ou vinylsulfonyle, $D_1$ représente un reste d'un diamino-benzène non substitué ou substitué par sulfo, et $K_1$ représente le reste de l'acide 1-amino-8-hydroxy-3,6- ou -4,6-disulfonique.

27. Colorants réactifs de formule (1b) selon la revendication 12, caractérisés en ce que Fa représente un reste répondant à la formule

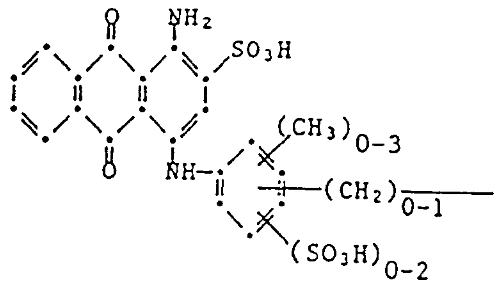

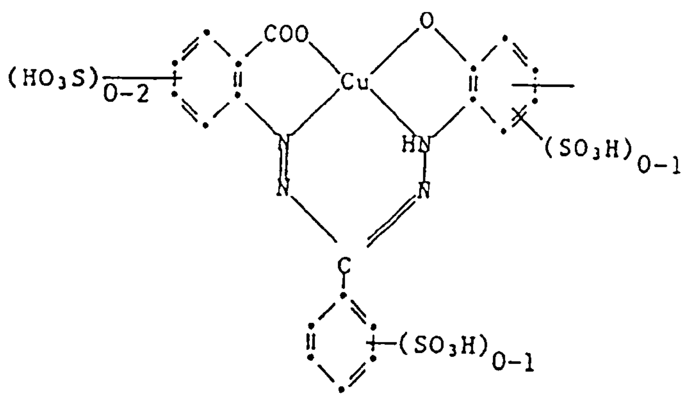

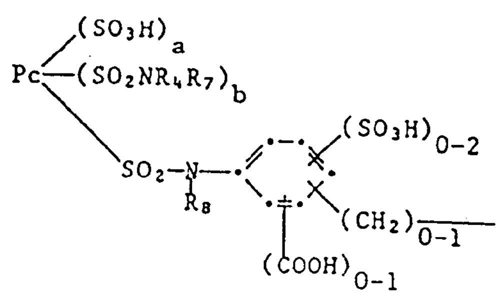

ou

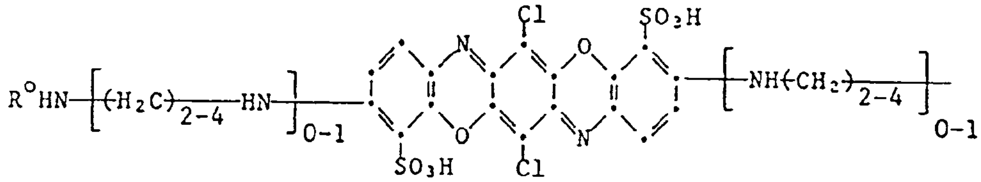

et Pc, $R_4$, $R_7$, $R_8$, a et b ont les significations indiquées dans la revendication 19.